(19) Europäisches Patentamt
European Patent Office
Office européen des brevets

(11) **EP 3 660 452 B1**

(12) **EUROPEAN PATENT SPECIFICATION**

(45) Date of publication and mention
of the grant of the patent:
**27.07.2022 Bulletin 2022/30**

(21) Application number: **18841158.1**

(22) Date of filing: **01.03.2018**

(51) International Patent Classification (IPC):
*G01C 11/02* (2006.01)    *G01C 21/20* (2006.01)
*G01S 17/48* (2006.01)    *G06T 7/73* (2017.01)

(52) Cooperative Patent Classification (CPC):
**G01C 21/206; G01C 11/02; G01C 21/343;
G01S 17/48; G06T 7/73;** G06T 2207/30164

(86) International application number:
**PCT/CN2018/077742**

(87) International publication number:
**WO 2019/024498 (07.02.2019 Gazette 2019/06)**

(54) **POSITIONING SYSTEM AND POSITIONING METHOD**

POSITIONIERUNGSSYSTEM UND POSITIONIERUNGSVERFAHREN

SYSTÈME DE POSITIONNEMENT ET PROCÉDÉ DE POSITIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2017 CN 201710640551**

(43) Date of publication of application:
**03.06.2020 Bulletin 2020/23**

(73) Proprietor: **Huawei Technologies Co., Ltd.
Shenzhen, Guangdong 518129 (CN)**

(72) Inventors:
• **WANG, Bingfu
Shenzhen, Guangdong 518129 (CN)**
• **LIU, Chenchen
Shenzhen, Guangdong 518129 (CN)**
• **LI, Jing
Shenzhen, Guangdong 518129 (CN)**
• **ZHANG, Junping
Shenzhen, Guangdong 518129 (CN)**
• **LIN, Haibo
Shenzhen, Guangdong 518129 (CN)**
• **ZENG, Chongyang
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
**EP-A1- 0 458 283      EP-A1- 2 161 695
CN-A- 101 661 098    CN-A- 103 322 943
CN-A- 106 403 941    CN-A- 106 461 378
CN-A- 106 781 476    CN-U- 205 909 828
US-A1- 2004 150 836  US-A1- 2016 377 417**

**Description**

## TECHNICAL FIELD

The present invention relates to the computer field, and in particular, to a positioning system and a positioning method.

## BACKGROUND

An accurate positioning technology is a prerequisite for implementing an information-based, big-data-based, and intelligence-based production organization process. The accurate positioning technology may be applied to industrial, virtual reality, sport, and robot fields. For example, in a modern smart factory in the industrial field, accurately positioning a person, a material, or a vehicle in real time plays an important role in the industry 4.0 (the fourth industrial revolution), and accurate location information of the person, material, and vehicle is fed back to a control center. This can facilitate material query, inventory, and vehicle monitoring, and improves a management level of an enterprise through proper scheduling and arrangement.

EP 2 161 695 A1 discloses a gate apparatus comprising: a projection part configured to project a repetitive pattern in which a first region having a first optical characteristic amount and a second region having a second optical characteristic amount are alternately arranged to a monitoring target region; an image taking part configured to take an image of the monitoring target region; a break extraction part configured to extract a break region which is a region in which a first image taken by the image taking part at a first time and a second image taken by the image taking part at a second time are different from each other; a characteristic amount extraction part configured to extract a predetermined characteristic amount of the break region; and a gate control part configured to control opening and closing of a gate based on the predetermined characteristic amount.

US 2004/150836 A1 discloses a method for determining the absolute coordinates of an object in which method the object is exposed to light through a projection grid; the light reflected by the object is registered by a sensor; and the image picked up by the sensor is evaluated.

US 2016/377417 A1 discloses a dual-projector three-dimensional (3D) scanner.

Common positioning technologies include global positioning system (global positioning system, GPS for short) positioning, wireless positioning, and the like. The GPS positioning cannot be used in an indoor environment such as a factory or a warehouse, and GPS positioning accuracy cannot meet an industrial production requirement. The wireless positioning may be used for indoor positioning. For example, in angle measurement positioning in the wireless positioning, direction information of an angle of arrival (angle of arrival, AoA for short) at which a signal is received between a to-be-positioned target and an anchor node or an angle of departure (angle of departure, AoD) at which a signal is sent between the to-be-positioned target and the anchor node is measured, to obtain a relative azimuth or angle between the to-be-positioned target and the anchor node, so as to determine that the to-be-positioned target is located on a straight line that is in a known direction and on which the anchor node is located. The to-be-positioned target is located at an intersection point of a plurality of straight lines.

A deployment location and a placement posture of the anchor node need to be carefully designed and implemented, and a deployment process is complex. Consequently, a large quantity of manpower resources are required during anchor node deployment and subsequent maintenance of the anchor node, and positioning costs are increased.

## SUMMARY

The above problems are solved by the appended claims.

Embodiments of the present invention provide a positioning system and a positioning method, to reduce positioning costs and effectively reduce manpower input.

The positioning system according to the present invention comprises at least one projection device, at least one camera, and a positioning engine, wherein the positioning engine is connected to any of the at least one projection device, and the positioning engine is further connected to any of the at least one camera; the at least one projection device is configured to project a first optical pattern onto a target region, wherein the first optical pattern comprises a plurality of sub-regions; the at least one camera is configured to collect a second picture and send the second picture to the positioning engine, wherein the second picture comprises the first optical pattern and a to-be-positioned object located in the first optical pattern; and the positioning engine is configured to receive the second picture, and determine a location of the to-be-positioned object in the target region based on a location of the to-be-positioned object in the first optical pattern in the second picture; and wherein the at least one camera is further configured to collect a first picture and send the first picture to the positioning engine, wherein the first picture comprises the first optical pattern projected by the at least one projection device onto the target region; and the positioning engine is further configured to receive the first picture and mark the target region based on the first picture. Further, the system comprises two projection devices: a first projection device and a second projection device, and the positioning engine marks the target region based on the first picture by: receiving two first pictures, wherein the two first pictures are collected by the at least one camera and are a first picture comprising the first optical pattern projected by the first projection device onto the target region and a first picture comprising the first optical pattern projected by the second projection device onto the target region; identifying the plurality of sub-regions comprised in the first optical pattern from each of the two first pictures; and sending adjustment information to the first projection device and/or the second projection device, so that the first projection device and/or the second projection device make/makes adjustment based on the adjustment information, and sub-regions in the first optical patterns in the two first pictures are aligned, wherein the adjustment information is used to control alignment of the sub-regions in the first optical patterns in the two first pictures.

The positioning method according to the present invention comprises obtaining a first picture collected by at least one camera, wherein the first picture comprises a first optical pattern projected by at least one projection device onto a target region, and the first optical pattern comprises a plurality of sub-regions; and marking the target region based on the first picture; obtaining a second picture collected by the at least one camera, wherein the second picture comprises the first optical pattern projected by the at least one projection device onto the target region and a to-be-positioned object located in the first optical pattern; and determining a location of the to-be-positioned object in the target region based on a location of the to-be-positioned object in the first optical pattern in the second picture. Further, the marking the target region based on the first picture comprises: receiving two first pictures, wherein the two first pictures are collected by the at least one camera and are a first picture comprising the first optical pattern projected by a first projection device onto the target region and a first picture comprising the first optical pattern projected by a second projection device onto the target region; identifying the plurality of sub-regions comprised in the first optical pattern from each of the two first pictures; and sending adjustment information to the first projection device and/or the second projection device, so that the first projection device and/or the second projection device make/makes adjustment based on the adjustment information, and sub-regions in the first optical patterns in the two first pictures are aligned, wherein the adjustment information is used to control alignment of the sub-regions in the first optical patterns in the two first pictures.

A first example provides a positioning system, including at least one projection device, at least one camera, and a positioning engine, where
the positioning engine is connected to any one of the at least one projection device, and the positioning engine is further connected to any one of at least one camera.

If the positioning system in this example is applied to open indoor environments such as warehousing and logistics and factory workshops, the to-be-positioned object may be a person, a material, a vehicle, or the like. The camera and the projection device may be suspended from a ceiling of the indoor environment, and a target region is a ground of the indoor environment.

The positioning engine is configured to send a projection instruction to the projection device.

The projection instruction is used to instruct the projection device to project a first optical pattern onto the target region. The first optical pattern projected onto the target region includes a plurality of sub-regions. Specifically, the projection instruction is used to indicate a shape, an area and the like of each sub-region included in the first optical pattern.

The projection device is configured to project the first optical pattern onto the target region based on the projection instruction.

The projection device may project the first optical pattern onto the target region by using a reflective imaging technology (for example, Liquid Crystal on Silicon, LCOS), a high temperature poly-silicon liquid crystal display technology, a digital micromirror device (Digital Micromirror Device, DMD) technology, a galvanometer scanner technology, or the like.

The at least one camera is configured to collect a second picture and send the second picture to the positioning engine, where the second picture includes the first optical pattern and a to-be-positioned object located in the first optical pattern.

The positioning engine is configured to receive the second picture, and determine a location of the to-be-positioned object in the target region based on a location of the to-be-positioned object in the first optical pattern in the second picture.

It can be learned that, according to the positioning system provided in this example, in a positioning process, the positioning engine may determine the location of the to-be-positioned object in the first optical pattern by using the second picture collected by the camera, so that the positioning engine can position the to-be-positioned object in the target region based on the location of the to-be-positioned object in the first optical pattern, and the positioning engine adaptively controls the projection device and the camera according to an application scenario and a positioning requirement. In this way, the to-be-positioned object is accurately positioned, and it can be learned that huge manpower input is not required and a lot of manpower costs are reduced in the positioning process.

Further,

the at least one camera is further configured to collect a first picture, where the first picture includes the first optical pattern projected by the at least one projection device onto the target region, and
the at least one camera is further configured to send the first picture to the positioning engine; and
the positioning engine is further configured to receive the first picture and mark the target region based on the first picture.

It can be learned that the projection device projects the first optical pattern onto the target region, the first optical pattern is used to mark the second picture, and the second picture can be used to effectively ensure accurate positioning of the to-be-positioned object. In addition, deployment of the positioning engine, the projection device, and the camera is easy, thereby reducing deployment costs.

Further,

the system includes two projection devices: a first projection device and a second projection device, where

the first projection device and the second projection device, respectively, are configured to project the first optical pattern onto the target region;

the at least one camera is configured to collect two first pictures, where

the two first pictures are a first picture including the first optical pattern projected by the first projection device onto the target region and a first picture including the first optical pattern projected by the second projection device onto the target region, and

the at least one camera is configured to send the two collected first pictures to the positioning engine; and

the positioning engine is configured to receive the two first pictures,

the positioning engine is configured to identify the plurality of sub-regions included in the first optical pattern from each of the two first pictures, and

the positioning engine is configured to send adjustment information to the first projection device and/or the second projection device, where

the first projection device and/or the second projection device make/makes adjustment based on the adjustment information, so that sub-regions in first optical patterns in the two first pictures are aligned, where the adjustment information is used to control alignment of the sub-regions in the first optical patterns in the two first pictures.

The positioning system in this example can adaptively adjust the first optical patterns projected onto the target region, so that the positioning engine can collect the first optical patterns in which the sub-regions are aligned, thereby effectively ensuring accuracy of marking the target region by using the first optical pattern, and effectively ensuring accurate positioning of the to-be-positioned object.

In an optional implementation of the first example,

the positioning engine is configured to determine a target sub-region, where the target sub-region is a sub-region that is in the plurality of sub-regions in the first optical pattern and in which the to-be-positioned object is located;

the positioning engine is further configured to send control signaling to the at least one projection device, where the control signaling is used to control the at least one projection device to project a second optical pattern onto the target sub-region, where

the second optical pattern includes a plurality of sub-regions, and an area of the sub-region included in the second optical pattern is less than an area of the sub-region included in the first optical pattern; and

the at least one projection device is configured to receive the control signaling and project, based on the control signaling, the second optical pattern onto the target sub-region.

According to the positioning system in this example, positioning accuracy of the to-be-positioned object can be further improved, and the to-be-positioned object can be roughly positioned by using the first optical pattern in this embodiment. When the target sub-region in which the target locating point of the to-be-positioned object is located in the first optical pattern is determined, the positioning engine may control the projection device to project the finer second optical pattern onto the target sub-region in the first optical pattern, to avoid projecting the second optical pattern with relatively high accuracy onto the entire target region. This can implement more accurate positioning, reduce complexity of positioning the to-be-positioned object, and improve efficiency of positioning the to-be-positioned object.

In an optional implementation of the first example,

the second picture further includes the second optical pattern and the to-be-positioned object located in the second optical pattern; and

the positioning engine is further configured to determine the location of the to-be-positioned object in the target region based on a location of the to-be-positioned object in the second optical pattern in the second picture.

According to the positioning system in this example, the to-be-positioned object can be accurately positioned based on the location of the to-be-positioned object in the second optical pattern. In addition, complexity of positioning the to-be-positioned object is reduced. Therefore, efficiency of positioning the to-be-positioned object is improved.

In an optional implementation of the first example,

the positioning engine is further configured to obtain a width of a target sub-region, where

the target sub-region is a sub-region that is in a plurality of sub-regions included in a target optical pattern and in which the to-be-positioned object is located, and

if the to-be-positioned object is positioned on based on the first optical pattern, the target sub-region in this implementation is a sub-region included in the first optical pattern, or

if the to-be-positioned object is accurately positioned based on the second optical pattern, the target sub-region in this implementation is a sub-region included in the second optical pattern; and

the positioning engine is further configure to determine the location of the to-be-positioned object in the target region based on a location of the target sub-region in the second picture and the width of the target sub-region.

In an optional implementation of the first example,

the at least one camera is further configured to collect height information, where the height information is used to indicate a height of the to-be-positioned object in the target region; and

the positioning engine is further configured to obtain the height information collected by the at least one camera.

The positioning system in this example can be further used to implement three-dimensional positioning on the to-be-positioned object. Therefore, more comprehensive positioning is implemented on the to-be-positioned object.

In an optional implementation of the first example,

the positioning engine is further configured to obtain the width $d_2$ of the target sub-region, where

the target sub-region is the sub-region that is in the plurality of sub-regions included in the target optical pattern and in which the to-be-positioned object is located, and

if the to-be-positioned object is positioned based on the first optical pattern, the target optical pattern in this implementation is the first optical pattern, or

if the to-be-positioned object is accurately positioned based on the second optical pattern, the target optical pattern in this implementation is the second optical pattern;

when the to-be-positioned object is located in the target optical pattern, the positioning engine is configured to obtain a width di of a sub-region projected by the at least one projection device onto a surface of the to-be-positioned object; and

the positioning engine is configured to obtain a height h of the to-be-positioned object in the target region according to a formula $h=(1-d_1/d_2)L$, where L is a height from the target region to the at least one projection device.

The positioning system in this example can be further used to implement three-dimensional positioning on the to-be-positioned object. Therefore, more comprehensive positioning is implemented on the to-be-positioned object.

In an optional implementation of the first example,

the at least one projection device is further configured to project target light, where

the target light is one of a plurality of beams of light projected by the at least one projection device; and

the positioning engine is further configured to: obtain a location of a projected point onto which the target light is projected in the target region, and

obtain a specified location when the to-be-positioned object is located in the target optical pattern, where if the to-be-positioned object is positioned based on the first optical pattern, the target optical pattern in this implementation is the first optical pattern, or

if the to-be-positioned object is accurately positioned based on the second optical pattern, the target optical pattern in this implementation is the second optical pattern,

the specified location is a location of a virtual image generated by reflected light in the target optical pattern after the reflected light enters one of the at least one camera, and

the reflected light is light generated by reflecting the target light from a surface of the to-be-positioned object, and

the positioning engine is further configured to obtain a height h of the to-be-positioned object in the target region according to a formula $h = \dfrac{L1}{L2+L1}L$, where

L1 is a distance between the location of the projected point and the specified location, L2 is a horizontal distance between the at least one projection device and the camera that are located on a same horizontal plane, and L is a height from the target region to the at least one projection device.

The positioning system in this example can be further used to implement three-dimensional positioning on the to-be-positioned object. Therefore, more comprehensive positioning is implemented on the to-be-positioned object.

A second example provides a positioning method, including the following steps:

Step A: A positioning engine obtains a second picture collected by at least one camera.

The second picture includes a first optical pattern projected by at least one projection device onto a target region and a to-be-positioned object located in the first optical pattern, and the first optical pattern includes a plurality of sub-regions.

Step B: The positioning engine determines a location of the to-be-positioned object in the target region based on a location of the to-be-positioned object in the first optical pattern in the second picture.

It can be learned that, according to the positioning method provided in this example, in a positioning process, the positioning engine may determine the location of the to-be-positioned object in the first optical pattern by using the second picture collected by the camera, so that the positioning engine can position the to-be-positioned object in the target region based on the location of the to-be-positioned object in the first optical pattern, and the positioning engine adaptively controls the projection device and the camera according to an application scenario and a positioning requirement. In this way, the to-be-positioned object is accurately positioned, and it can be learned that huge manpower input is not required and a lot of manpower costs are reduced in the positioning process.

Further, the following steps need to be further performed before step A:

Step A01: Obtain a first picture collected by the at least one camera.

The first picture includes the first optical pattern projected by the at least one projection device onto the target region.

Step A02: Mark the target region based on the first picture.

It can be learned that the projection device projects the first optical pattern onto the target region, the first optical pattern is used to mark the second picture, and the second picture can be used to effectively ensure accurate positioning of the to-be-positioned object. In addition, deployment of the positioning engine, the projection device, and the camera is easy, thereby reducing deployment costs.

Further, step A02 specifically includes the following steps:

> receiving two first pictures, where the two first pictures are collected by the at least one camera and are a first picture including the first optical pattern projected by a first projection device onto the target region and a first picture including the first optical pattern projected by a second projection device onto the target region;
> identifying the plurality of sub-regions included in the first optical pattern from each of the two first pictures; and
> sending adjustment information to the first projection device and/or the second projection device, so that the first projection device and/or the second projection device make/makes adjustment based on the adjustment information, and sub-regions in the first optical patterns in the two first pictures are aligned, where the adjustment information is used to control alignment of the sub-regions in the first optical patterns in the two first pictures.

The positioning method in this example can adaptively adjust the first optical patterns projected onto the target region, so that the positioning engine can collect the first optical patterns in which the sub-regions are aligned, thereby effectively ensuring accuracy of marking the target region by using the first optical pattern, and effectively ensuring accurate positioning of the to-be-positioned object.

In an optional implementation of the second example, the following steps need to be further performed before step A:

Step A11: Determine a target sub-region.

The target sub-region is a sub-region that is in the plurality of sub-regions in the first optical pattern and in which the to-be-positioned object is located.

Step A12: Send control signaling to the at least one projection device.

The control signaling is used to control the at least one projection device to project a second optical pattern onto the target sub-region, the second optical pattern includes a plurality of sub-regions, and an area of the sub-region included in the second optical pattern is less than an area of the sub-region included in the first optical pattern.

According to the positioning method in this example, positioning accuracy of the to-be-positioned object can be further improved, and the to-be-positioned object can be roughly positioned by using the first optical pattern in this embodiment. When the target sub-region in which the target locating point of the to-be-positioned object is located in the first optical pattern is determined, the positioning engine may control the projection device to project the finer second optical pattern onto the target sub-region in the first optical pattern, to avoid projecting the second optical pattern with relatively high accuracy onto the entire target region. This can implement more accurate positioning, avoid complexity of positioning the to-be-positioned object, and improve efficiency of positioning the to-be-positioned object.

In an optional implementation of the second example, step B specifically includes:

determining the location of the to-be-positioned object in the target region based on a location of the to-be-positioned object in the second optical pattern in the second picture.

According to the positioning method in this example, the to-be-positioned object can be accurately positioned based on the location of the to-be-positioned object in the second optical pattern. In addition, complexity of positioning the to-be-positioned object is reduced. Therefore, efficiency of positioning the to-be-positioned object is improved.

In an optional implementation of the second example, step B specifically includes the following steps:

Step B11: Obtain a width of a target sub-region.

The target sub-region is a sub-region that is in a plurality of sub-regions included in a target optical pattern and in which the to-be-positioned object is located.

If the to-be-positioned object is positioned based on the first optical pattern, the target sub-region in this implementation is a sub-region included in the first optical pattern.

If the to-be-positioned object is accurately positioned based on the second optical pattern, the target sub-region in this implementation is a sub-region included in the second optical pattern.

Step B12: Determine the location of the to-be-positioned object in the target region based on a location of the target sub-region in the second picture and the width of the target sub-region.

In an optional implementation of the second example, the method further includes:
obtaining, by the positioning engine height information collected by the at least one camera, where the height information is used to indicate a height of the to-be-positioned object in the target region.

The positioning method in this example can be further used to implement three-dimensional positioning on the to-be-positioned object. Therefore, more comprehensive positioning is implemented on the to-be-positioned object.

In an optional implementation of the second example, step B specifically further includes the following steps:
Step B21: The positioning engine obtains the width $d_2$ of the target sub-region.

The target sub-region is the sub-region that is in the plurality of sub-regions included in the target optical pattern and in which the to-be-positioned object is located.

If the to-be-positioned object is positioned based on the first optical pattern, the target optical pattern in this implementation is the first optical pattern.

If the to-be-positioned object is accurately positioned based on the second optical pattern, the target optical pattern in this implementation is the second optical pattern.

Step B22: When the to-be-positioned object is located in the target optical pattern, the positioning engine obtains a width di of a sub-region projected by the at least one projection device onto a surface of the to-be-positioned object.

Step B23: Obtain a height h of the to-be-positioned object in the target region according to a formula $h=(1-d_1/d_2)L$.

L is a height from the target region to the at least one projection device.

The positioning system in this example can be further used to implement three-dimensional positioning on the to-be-positioned object. Therefore, more comprehensive positioning is implemented on the to-be-positioned object.

In an optional implementation of the second example, step B specifically includes the following steps:

Step B31: The positioning engine obtains a location of a projected point onto which the at least one projection device projects target light in the target region.

The target light is one of a plurality of beams of light projected by the at least one projection device.

Step B32: Obtain a specified location when the to-be-positioned object is located in the target optical pattern.

If the to-be-positioned object is positioned based on the first optical pattern, the target optical pattern in this implementation is the first optical pattern.

If the to-be-positioned object is accurately positioned based on the second optical pattern, the target optical pattern in this implementation is the second optical pattern.

The specified location is a location of a virtual image generated by reflected light in the target optical pattern after the reflected light enters one of the at least one camera, and the reflected light is light generated by reflecting the target light from a surface of the to-be-positioned object.

Step B33: The positioning engine obtains a height h of the to-be-positioned object in the target region

$$h = \frac{L1}{L2 + L1} L$$

according to a formula .

L1 is a distance between the location of the projected point and the specified location, L2 is a horizontal distance between the at least one projection device and the camera that are located on a same horizontal plane, and L is a height from the target region to the at least one projection device.

According to the foregoing technical solutions, it can be learned that the embodiments of the present invention have the following advantages:

According to the positioning system and positioning method in this application, in the positioning process, the projection device projects the first optical pattern onto the target region, where the first optical pattern is used to mark the second picture; and the positioning engine may determine the location of the to-be-positioned object in the first optical pattern by using the second picture collected by the camera, so that the positioning engine can position the to-be-positioned object in the target region based on the location of the to-be-positioned object in the first optical pattern. In addition, deployment of the positioning engine, the projection device, and the camera is easy, thereby reducing deployment costs. The positioning engine adaptively controls the projection device and the camera according to an application scenario and a positioning requirement. In this way, the to-be-positioned object is positioned, and it can be learned that huge manpower input is not required and a lot of manpower costs are reduced in the positioning process.

## BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person skilled in the art may still derive other drawings from these accompanying drawings.

FIG. 1 is a schematic structural diagram of a positioning system according to the invention;

FIG. 2 is a flowchart of some steps of an embodiment of a positioning method according to the invention;

FIG. 3 is a schematic structural diagram of an embodiment of a first optical pattern included in a target region according to this application;

FIG. 4 is a schematic structural diagram of another embodiment of a first optical pattern included in a target region according to this application;

FIG. 5 is a flowchart of some steps of the positioning method according to the invention ;

FIG. 6 is a schematic structural diagram of an embodiment of a first optical pattern included in a target region according to this application;

FIG. 7 is a schematic structural diagram of another embodiment of a first optical pattern included in a target region according to this application;

FIG. 8 is a schematic structural diagram of another embodiment of a first optical pattern included in a target region according to this application;

FIG. 9 is a schematic diagram of an embodiment of obtaining a width of a target sub-region in a target region according to this application;

FIG. 10 is a schematic diagram of another embodiment of obtaining a width of a target sub-region in a target region according to this application;

FIG. 11 is a schematic diagram of another embodiment of obtaining a width of a target sub-region in a target region according to this application;

FIG. 12 is a flowchart of steps of another embodiment of a positioning method according to this application;

FIG. 13 is a schematic structural diagram of an embodiment of a second optical pattern included in a target region according to this application; and

FIG. 14 is a schematic structural diagram of another embodiment of a second optical pattern included in a target region according to this application.

**DESCRIPTION OF EMBODIMENTS**

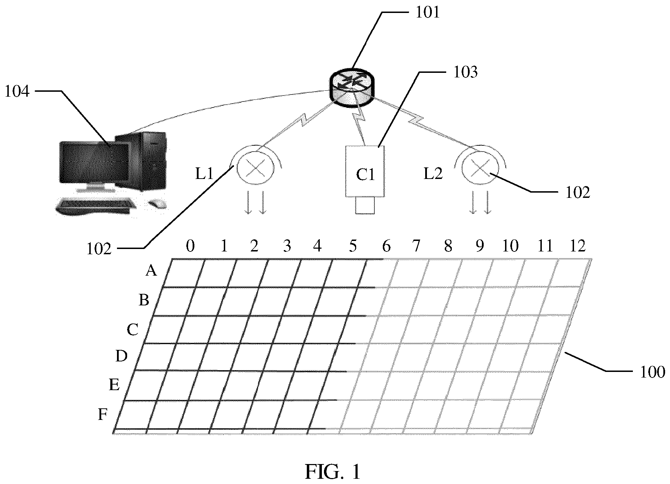

This application first provides a positioning system that can position a to-be-positioned object. The following describes a specific structure of the positioning system with reference to FIG. 1.

The positioning system includes a positioning engine 101, at least one camera 103, and at least one projection device 102.

The at least one camera 103 in this embodiment is connected to the positioning engine 101 in a wired or wireless manner, and the at least one projection device 102 is connected to the positioning engine 101 in a wired or wireless manner.

Optionally, the positioning engine 101 in this application may be physically integrated into the camera 103, and the camera 103 and the projection device 102 may be connected in a wired or wireless manner.

Optionally, the positioning engine 101 in this application may be physically integrated into the projection device 102, and the projection device 102 and the camera 103 may be connected in a wired or wireless manner.

The wired manner in this application may be a wired manner for which Ethernet, a cable, a twisted pair, an optical fiber, or the like is used.

The wireless manner may be a wireless manner such as wireless fidelity (Wireless-Fidelity, Wi-Fi), Bluetooth, internet of things (Internet of Things, IoT), or the like.

The at least one projection device 102 is configured to project an optical pattern 100 onto a target region under control of the positioning engine 101.

The at least one camera 103 is configured to photograph the target region under control of the positioning engine 101, to obtain a picture including the optical pattern 100.

The positioning engine 101 can analyze the picture, to position the to-be-positioned object in the target region.

When the positioning system in this application is applied to open indoor environments such as warehousing and logistics and factory workshops, the to-be-positioned object may be a person, a material, a vehicle, or the like, the camera 103 and the projection device 102 may be suspended from a ceiling of the indoor environment, and the target region is a ground of the indoor environment.

It should be noted that the application field of the positioning system is used as an example for description and is not limited in this application. For example, the positioning system may be further applied to virtual reality and other fields.

The positioning system may further include a computer device 104. The positioning engine 101 may send related information to the computer device 104, where the related information may be positioning information, and the positioning information is information about a location, determined by the positioning engine 101, of the to-be-positioned object in the target region, so that the computer device 104 can query, inventory, and monitor the to-be-positioned object based on the location information, and properly schedule arrange the to-be-positioned object.

The related information may alternatively be deployment information. The deployment information is used to indicate deployment location information and the like of the camera 103 and the projection device 102 in a factory or a warehouse. This helps the computer device 104 perform statistics collection on and manage the camera 103 and the projection device 102.

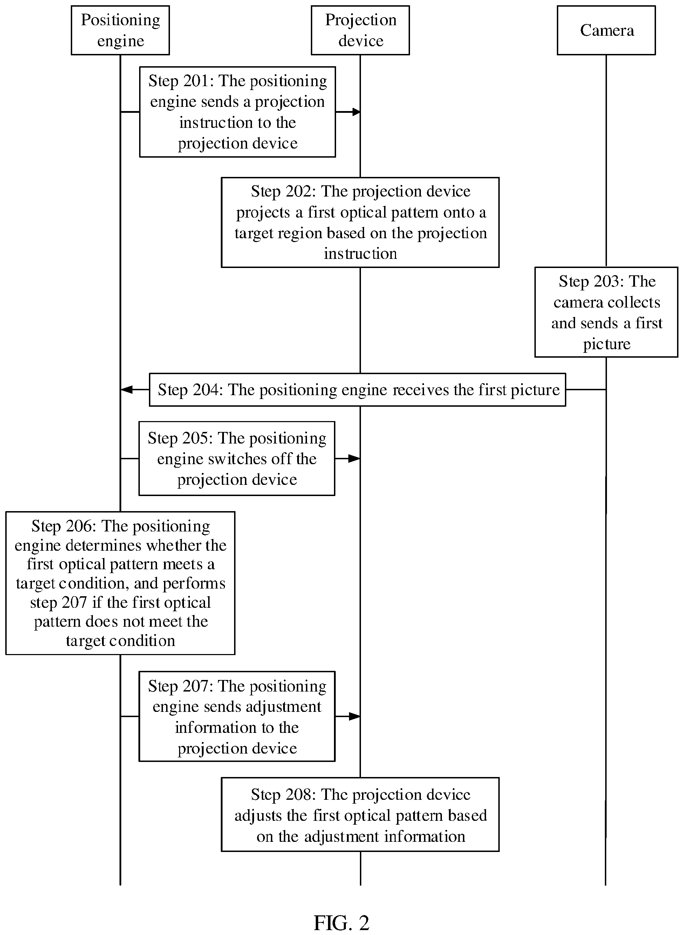

To accurately position the to-be-positioned object, a first optical pattern projected by the projection device onto the target region needs to be corrected first, and the corrected first optical pattern can be used to mark a first picture collected by the camera. Based on the positioning system shown in FIG. 1, the following describes, with reference to an embodiment shown in FIG. 2, a specific process of correcting the first optical pattern projected by the projection device onto the target region.

Step 201: The positioning engine sends a projection instruction to the projection device.

The projection device in this step is any of a plurality of projection devices included in the positioning system.

The projection instruction in this embodiment is used to instruct the projection device to project the first optical pattern onto the target region. The first optical pattern projected onto the target region includes a plurality of sub-regions.

The following describes the projection instruction in detail.

The positioning engine in this embodiment may predetermine a shape of each sub-region included in the first optical pattern. The shape of each sub-region in this embodiment may be a rhombus, a circle, a sector, a hexagon, or a square.

In this embodiment, for example, each sub-region is in a shape of a square shown in FIG. 1. In this case, the projection instruction generated by the positioning engine is used to indicate that the shape of the sub-region projected by the projection device onto the target region is a square.

The description of the projection instruction is an optional example and is not limited in this embodiment. For example, the projection instruction may be alternatively used to indicate an area of the sub-region projected by the projection device.

In this embodiment, a smaller sub-region area indicated by the projection instruction indicates more accurate positioning of the to-be-positioned object. It can be learned that the positioning engine may determine a different sub-region area based on a different application scenario. For example, if the to-be-positioned object needs to be positioned with high accuracy, the sub-region area indicated by the projection instruction is relatively small. If the to-be-positioned object needs to be roughly positioned, the sub-region area indicated by the projection instruction is relatively large.

Step 202: The projection device projects the first optical pattern onto the target region based on the projection instruction.

In this embodiment, when the projection device receives the projection instruction, the projection device may project the first optical pattern onto the target region, and a shape of the sub-region in the first optical pattern projected by the projection device is the same as the shape indicated by the projection instruction.

The first optical pattern includes the plurality of sub-regions, and the plurality of sub-regions may be used to mark the target region. The positioning engine can position the to-be-positioned object in the marked target region.

Specifically, the projection device in this embodiment may project the first optical pattern onto the target region by using a reflective imaging technology (Liquid Crystal on Silicon, LCOS), a high temperature poly-silicon liquid crystal display technology, a digital micromirror device (Digital Micro-mirror Device, DMD) technology, a galvanometer scanner technology, or the like.

Optionally, light projected by the projection device in this embodiment may be visible light.

When the projection device in this embodiment is deployed on a ceiling of an indoor environment, the projection device that projects visible light may be used to replace an illuminating lamp in the indoor environment. The projection device provides an indoor lighting and can further implement a procedure of positioning the to-be-positioned object in this application. Therefore, less illuminating lamps are deployed, and costs are reduced.

Optionally, the light projected by the projection device in this embodiment may be invisible light such as infrared light or ultraviolet light. If the light projected by the projection device is infrared light, the camera in this embodiment needs to have a capability of collecting an infrared image, and the camera having the capability of collecting an infrared image can photograph the first optical pattern projected by the projection device by using infrared light.

Optionally, the projection device in this embodiment may project a dark line whose luminance is less than a preset threshold onto the target region. Because a large part of the target region is illuminated and presented bright, the dark line projected by the projection device may form the first optical pattern on the target region.

Step 203: The camera collects and sends a first picture.

In this embodiment, the positioning engine may control the camera to photograph the target region, and the camera may collect the first picture. The first picture includes the first optical pattern projected by the at least one projection device onto the target region.

One or more cameras included in the positioning system in this embodiment may simultaneously photograph the target region, to obtain one or more first pictures.

Step 204: The positioning engine receives the first picture.

Optionally, the positioning engine in this embodiment may receive a plurality of first pictures. The plurality of first pictures may be collected by any camera included in the positioning system by consecutively photographing the target region, or the plurality of first pictures may be collected by a plurality of cameras included in the positioning system by separately photographing the target region.

In this embodiment, because the first picture may suffer interference from other information such as digital noise, when analyzing the first picture, the positioning engine cannot detect the first optical pattern collected by the camera. In this case, the positioning engine may detect the plurality of obtained first pictures one by one until the first optical pattern included in the first picture is successfully detected.

Optionally, if the positioning engine in this embodiment successfully detects the first optical pattern in the plurality of first pictures, the positioning engine may randomly select, from the plurality of first pictures in which the first optical pattern is successfully detected, a first picture including the first optical pattern. Alternatively, the positioning engine may select a first picture with a clearest first optical pattern. This is not specifically limited in this embodiment.

Step 205: The positioning engine switches off the projection device.

In this embodiment, in a process in which the camera photographs the target region, if the to-be-positioned object appears in the first optical pattern, the first picture photographed by the camera includes the to-be-positioned object located in the first optical pattern. In this case, the first picture is a second picture described in this application.

When the positioning engine obtains the first picture including the first optical pattern, the positioning engine may identify attribute information such as a shape, a location, and an orientation of the first optical pattern, and store the attribute information.

In this embodiment, when the positioning engine successfully stores the attribute information of the first optical pattern, the positioning engine may send a switch-off instruction to the projection device. The switch-off instruction is used to instruct to switch off the projection device. The projection device may be switched off after receiving the switch-off instruction.

In this embodiment, for example, the positioning system includes a plurality of projection devices. In this case, after step 205 is completed, step 201 may be returned to and performed, until step 201 to step 205 are performed once between each of the plurality of projection devices included in the positioning system and the positioning engine, so that the positioning engine can store attribute information corresponding to the projection devices.

Step 206: The positioning engine determines whether the first optical pattern meets a target condition, and performs step 207 if the first optical pattern does not meet the target condition.

The target condition in this embodiment is that any two adjacent sub-regions in first optical patterns projected by the projection devices onto the target region are aligned with each other and the any two adjacent sub-regions have a same pattern.

Specifically, the pattern refers to a shape of each sub-region and an area of each sub-region.

Specifically, the positioning engine may determine, based on the attribute information corresponding to the projection devices, whether the first optical patterns meet the target condition. If the first optical patterns do not meet the target condition, the positioning engine may analyze the first optical patterns projected by the projection devices. If shapes of first optical patterns projected by different projection devices are different, the positioning engine may control, by using adjustment information, the shapes of the first optical patterns projected by the projection devices until shapes of the first optical patterns projected by all the projection devices are the same.

The positioning engine may perform binarization on the first picture. To be specific, the positioning engine resets a luminance value of a pixel in the first picture, so that a luminance value of the first optical pattern is different from a luminance value of a background of the first picture. In this way, the positioning engine can extract the first optical pattern from the first picture, and determine whether the shapes of the first optical patterns projected by the different projection devices are the same.

The description of a process of extracting the first optical pattern from the first picture by the positioning engine is an optional example and is not limited in this embodiment. In a specific application, it is only required that the positioning engine can successfully extract the first optical pattern.

Specifically, if two adjacent first optical patterns projected by the projection devices are not aligned, the positioning engine may control, by using the adjustment information, the projection devices to perform operations such as translation, rotation, zooming, and amplification, until the two adjacent first optical patterns are aligned with each other.

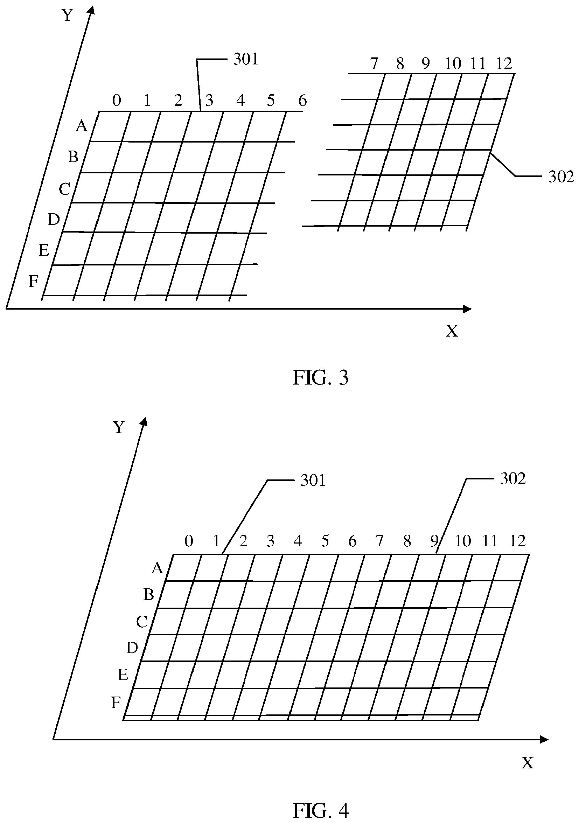

For example, with reference to FIG. 1 and FIG. 3, the positioning engine 101 determines a first optical pattern 301 and a first optical pattern 302 based on attribute information sent by a first projection device L1 and a second projection device L2. The first projection device may be any projection device included in the positioning system. The first optical pattern 301 is an optical pattern projected by the first projection device L1 included in the positioning system, the first optical pattern 302 is an optical pattern projected by the second projection device L2 included in the positioning system, and the first optical pattern 301 is adjacent to the first optical pattern 302 in the target region.

As shown in FIG. 3, the positioning engine may determine, based on the attribute information, that patterns of any two sub-regions included in the first optical pattern 301 and the first optical pattern 302 are the same. However, the first optical pattern 301 and the first optical pattern 302 are not aligned with each other. In this case, step 208 may be performed to align the first optical pattern 301 and the first optical pattern 302.

If the positioning engine determines, based on the attribute information, that the patterns of the any two sub-regions included in the first optical pattern 301 and the first optical pattern 302 are the same, and the first optical pattern 301 and the first optical pattern 302 are aligned with each other, it indicates that the first optical patterns projected by the projection devices do not need to be corrected.

Step 207: The positioning engine sends the adjustment information to the projection device.

The adjustment information in this embodiment is used to instruct the projection device to select a pattern of the first optical pattern and perform operations such as translation, rotation, and zooming on the projected first optical pattern.

Specifically, as shown in FIG. 3, the adjustment information in this embodiment may be used to indicate a distance by which the first projection device translates the first optical pattern along an X axis and a distance by which the first projection device translates the first optical pattern along a Y axis.

Step 208: The projection device adjusts the first optical pattern based on the adjustment information.

As shown in FIG. 4, the first projection device in this embodiment translates, based on the adjustment information, the first optical pattern projected by the first projection device along the X axis and the Y axis, so that the translated first optical pattern 301 projected by the first projection device L1 and the translated first optical pattern 302 projected by the second projection device L2 are aligned with each other.

Step 206 to step 208 in this embodiment may be repeated a plurality of times, so that the first optical patterns projected by the projection devices onto the target region can be aligned with each other more accurately, and it is ensured that patterns of any two sub-regions in the plurality of first optical patterns in the target region are the same.

The procedure in step 201 to step 208 in this embodiment shows a specific process of correcting the first optical patterns projected onto the target region when the positioning system includes the plurality of projection devices.

In a specific application, the positioning system in this application may alternatively include only one projection device. When the positioning system includes one projection device, in a process of performing step 207 in this embodiment, the target condition may be that patterns of any two sub-regions in the first optical pattern are the same.

If the positioning engine determines, by performing step 206, that the patterns of the any two sub-regions in the first optical pattern are different, the positioning engine may send the adjustment information to the projection device, so that the projection device can change the pattern of the first optical pattern until the patterns of the any two sub-regions in the first optical pattern are the same.

In this embodiment, for example, the positioning engine sequentially sends the projection instruction to the plurality of projection devices.

Alternatively, in this application, the positioning engine may simultaneously send the projection instruction to the plurality of projection devices. To distinguish between the first optical patterns projected by the projection devices, the positioning engine controls, by using the configured projection instruction, the different projection devices to project the different first optical patterns. For example, the projection instruction is used to instruct the different projection devices to project the first optical patterns with different colors. For another example, the projection instruction is used to instruct the different projection devices to project the first optical patterns with different luminance. For another example, the projection instruction is used to instruct the different projection devices to project the first optical patterns with different flicker frequencies.

When the positioning engine distinguishes the first optical patterns projected by the different projection devices, the positioning engine can obtain the attribute information of the first optical patterns projected by the different projection devices. For a specific description of the attribute information, refer to the foregoing descriptions. Details are not described again. For details about a manner of correcting first optical patterns by the positioning engine based on the attribute information corresponding to the projection devices, refer to the foregoing descriptions. Details are not described again.

That the positioning engine simultaneously sends the projection instruction to the plurality of projection devices can greatly reduce time spent in the process of correcting the first optical patterns, and improve efficiency of correcting the first optical patterns.

In the embodiment shown in FIG. 2 of this application, in a process in which the positioning engine positions the to-be-positioned object, the embodiment shown in FIG. 2 does not need to be implemented each time the to-be-positioned object is positioned. The embodiment shown in FIG. 2 needs to be implemented only when a positioning environment changes, for example, the camera or the projection device included in the positioning system is not properly placed, or the camera or the projection device is re-deployed. The embodiment shown in FIG. 2 may be not implemented when the positioning environment does not change. Certainly, to effectively ensure accurate positioning of the to-be-positioned object, the embodiment shown in FIG. 2 can be implemented each time the to-be-positioned object is positioned. This is not specifically limited in this application.

According to the method in this embodiment, the first optical pattern can be corrected, the positioning engine can correct the first optical pattern in a correction process by adaptively controlling the camera and the projection device, and the corrected first optical pattern can be used to accurately mark the first picture. Therefore, positioning accuracy of the to-be-positioned object is improved, and manual intervention is not required in the correction process. This greatly reduces manpower costs. In addition, it is easy and convenient to deploy the positioning engine, the projection device, and the camera, and there is no need to deploy an expensive device. This reduces deployment costs of the positioning system. Therefore, this method is applicable to the industry in large scale. Even if locations of the camera and the projection device change, the positioning engine can also correct the first optical pattern again. This effectively ensures subsequent positioning accuracy of the to-be-positioned object, greatly reduces manpower input, and reduces deployment costs.

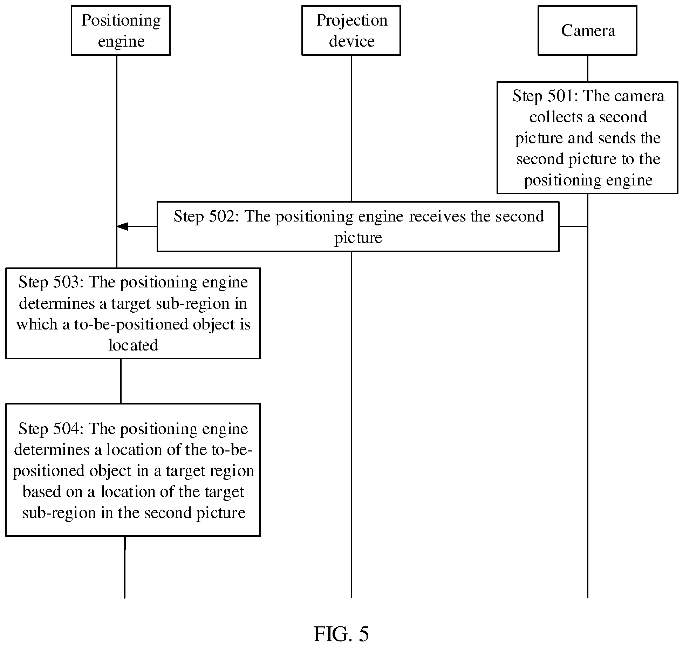

The specific process of correcting the first optical pattern projected by the projection device onto the target region is described based on FIG. 2. The following describes a specific process of positioning the to-be-positioned object with reference to an embodiment shown in FIG. 5.

Step 501: The camera collects a second picture and sends the second picture to the positioning engine.

The second picture includes the first optical pattern and the to-be-positioned object located in the first optical pattern.

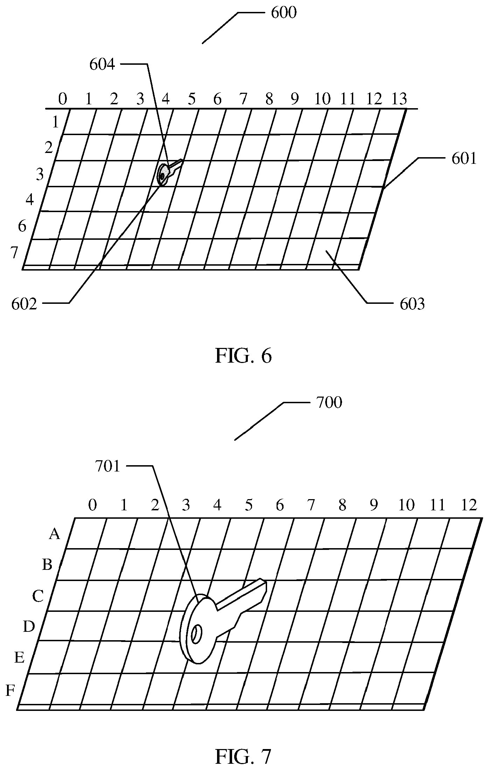

As shown in FIG. 6, a second picture 600 includes a first optical pattern 601 projected by the projection device onto the target region. The first optical pattern in this embodiment is the corrected first optical pattern in the embodiment in FIG. 2.

Optionally, when the to-be-positioned object needs to be positioned, the positioning engine may control the camera to collect the second picture. Specifically, the positioning engine sends a collection instruction to the camera, so that the camera photographs the target region to collect the second picture when receiving the collection instruction.

The positioning engine may analyze the collected second picture. If the second picture includes a to-be-positioned object 602 located in the first optical pattern 601 shown in FIG. 6, a subsequent step may be performed to implement the process of positioning the to-be-positioned object.

Optionally, when a user determines that the to-be-positioned object needs to be positioned, the user may input positioning instruction information into the positioning engine, and the positioning engine may receive the positioning instruction information input by the user. After the positioning engine receives the positioning instruction information, step 501 in this embodiment may be performed.

The positioning engine may directly receive the positioning instruction information input by the user. For example, the positioning engine may generate an operation interface, where the operation interface is used to receive the positioning instruction information input by the user. Alternatively, the positioning engine may receive, by using an external device connected to the positioning engine, the positioning instruction operation input by the user. The external device may be the computer device 104 shown in FIG. 1, or a terminal device, for example, a smartphone, connected to the positioning engine.

Step 502: The positioning engine receives the second picture.

Optionally, in this embodiment, the at least one camera may collect a plurality of second pictures. The positioning engine may analyze the plurality of second pictures, and the positioning engine randomly selects a second picture from a plurality of second pictures that are successfully detected to include the first optical pattern, or the positioning engine may select a second picture with a first optical pattern and the to-be-positioned object that are clearest. This is not specifically limited in this embodiment.

Step 503: The positioning engine determines a target sub-region in which the to-be-positioned object is located.

The first optical pattern includes a plurality of sub-regions, and a sub-region in which the to-be-positioned object is located in the plurality of sub-regions is the target sub-region.

An example is used below to describe a process of determining the target sub-region by the positioning engine.

The positioning engine identifies the to-be-positioned object in the second picture based on a feature of the to-be-positioned object, and determines the target sub-region in which the to-be-positioned object is located in the second picture.

Specifically, to accurately position the to-be-positioned object in the target sub-region, the positioning engine may prestore the feature corresponding to the to-be-positioned object. When the positioning engine obtains the second picture, the positioning engine may extract a feature from the second picture, to determine whether an extracted feature matches the feature corresponding to the to-be-positioned object. If the extracted feature matches the feature corresponding to the to-be-positioned object, the positioning engine can identify the to-be-positioned object in the second picture.

Optionally, when the positioning engine obtains the plurality of second pictures collected by the at least one camera, the positioning engine may extract a feature from the plurality of second pictures one by one, until the positioning engine successfully identifies the to-be-positioned object in the second picture.

In this embodiment, the first optical pattern projected onto the target region includes the plurality of sub-regions. A relative position of the first optical pattern in the second picture in this embodiment is the same as a relative position of the corrected first optical pattern in the first picture in the embodiment in FIG. 2, to accurately position the to-be-positioned object.

As shown in FIG. 6, in the second picture, the first optical pattern 601 includes a plurality of sub-regions 603. The target sub-region 604 is a sub-region in which the to-be-positioned object 602 is located in the plurality of sub-regions 603.

FIG. 6 shows a manner of determining the target sub-region by the positioning engine when the to-be-positioned object is located in one sub-region. The following describes a specific process of determining the target sub-region by the positioning engine when the to-be-positioned object is located in a plurality of sub-regions.

As shown in FIG. 7, in the second picture 700, the to-be-positioned object 701 is located in eight sub-regions. In this case, the positioning engine may determine that a sub-region in which a target locating point is located is the target sub-region.

The target locating point is a pixel corresponding to the to-be-positioned object 701.

For example, the target locating point may be any pixel on the to-be-positioned object 701. For example, the target locating point may be a pixel at a geometric center of the to-be-positioned object 701.

For another example, the target locating point may be any pixel surrounding the to-be-positioned object 701.

The target locating point is not limited in this embodiment, provided that the to-be-positioned object can be positioned by using the target locating point. In this embodiment, for example, the target locating point is the pixel at the geometric center of the to-be-positioned object 701. In this case, the target sub-region is a sub-region in which the pixel at the geometric center of the to-be-positioned object 701 is located.

Specifically, to accurately position the to-be-positioned object, the positioning engine in this embodiment may determine coordinates of the to-be-positioned object in the second picture.

The positioning engine may specify a coordinate origin in the second picture.

In this embodiment, a specified location of the coordinate origin is not limited, provided that the coordinate origin is any pixel in the second picture. For example, the positioning engine may use a pixel at the upper left corner of the second picture in FIG. 6 as the coordinate origin.

In step 503 in this embodiment, the positioning engine can determine a location of the target sub-region in the second picture. To be specific, the positioning engine can determine a specific row and a specific column in which the target sub-region is located in the second picture.

In this embodiment, the positioning engine may obtain a second picture sequence, where the second picture sequence includes a plurality of second pictures photographed by the at least one camera, and the second pictures in the second picture sequence are sorted in order of photographing time. When the to-be-positioned object is moving, relative positions of the target locating point of the to-be-positioned object in the second pictures are different. In this case, the positioning engine may determine a location change of the to-be-positioned object relative to the second picture at a different photographing time, and the positioning engine determines a moving track, a moving speed, or the like of the to-be-positioned object.

Step 504: The positioning engine determines a location of the to-be-positioned object in the target region based on the location of the target sub-region in the second picture.

In this embodiment, there is a location mapping relationship between the second picture and the target region. The positioning engine can determine the location of the to-be-positioned object in the target region when determining the location of the target sub-region in the second picture.

The positioning engine already stores a relative position of the target region relative to a ground in an indoor environment, and the positioning engine may determine a location of the to-be-positioned object relative to the ground in the indoor environment based on the location of the to-be-positioned object in the target region.

In this embodiment, the location of the to-be-positioned object in the target region may be a two-dimensional location of the to-be-positioned object in the target region.

For example, in this embodiment, the location of the to-be-positioned object in the target region may be a two-dimensional location of the to-be-positioned object on the ground in the indoor environment.

Specifically, the positioning engine may obtain the location of the to-be-positioned object in the target region based on the location of the target sub-region in the second picture and a width of the target sub-region. FIG. 6 is used as an example, and the positioning engine may obtain a width of each of the sub-regions. For example, when the projection device projects the sub-regions onto the target region, the width of each of the sub-regions is 1 meter.

When the positioning engine determines that the target sub-region is a sub-region in the fifth row and the third column in the first optical pattern, the positioning engine may determine that coordinates of the target sub-region including the to-be-positioned object are (5 x 1, 3 x 1) in the target region. Therefore, the to-be-positioned object is positioned by determining the coordinates of the target sub-region in the target region.

In this embodiment, for example, each sub-region is in a shape of a square. In a specific application, the sub-region may be in another shape. In a process of positioning the to-be-positioned objected, the location of the to-be-positioned object in the target region can be obtained, provided that the location of the target sub-region in the second picture and the width of the target sub-region are determined.

An example is used below to describe a process of determining the width of the target sub-region.

A first manner of determining the width of the target sub-region is as follows:

The positioning engine may obtain at least four preset pixels in the second picture.

Specifically, the positioning engine has obtained coordinates of the preset pixels in the second picture and coordinates of the preset pixels in the target region.

In this embodiment, for example, a user may input in advance the coordinates of the preset pixels in the second picture and the coordinates of the preset pixels in the target region that are obtained by the positioning engine.

It should be noted that a specific manner of obtaining, by the positioning engine, the coordinates of the preset pixels in the second picture and the coordinates of the preset pixels in the target region is not limited in this embodiment.

A coordinate system of the second picture and a coordinate system of the target region may correspond to each other. For example, the coordinate origin in the second picture is located at the upper left corner of the second picture. Correspondingly, a coordinate origin in the target region is located at the upper left corner of the target region.

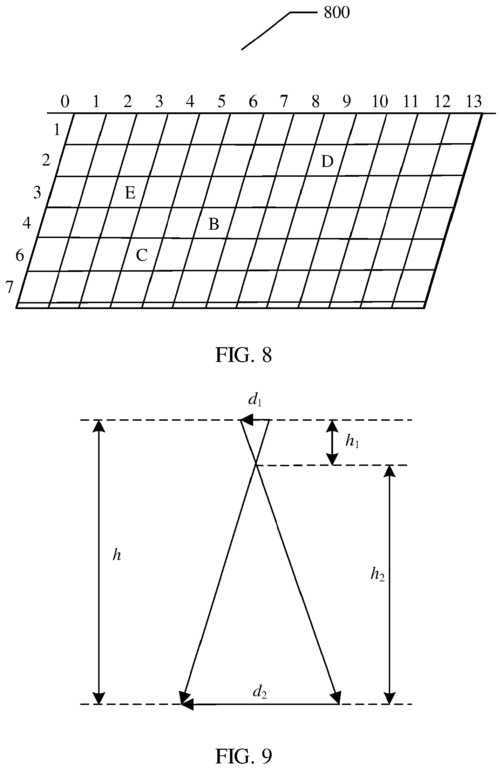

As shown in FIG. 8, for example, each sub-region is a square image.

In this embodiment, for example, the positioning engine determines preset pixels E, B, C, and D in the second picture 800. In this case, the positioning engine may determine that coordinates, in the second picture 800, of a sub-region including the preset pixel E are $(x1, y1)$, namely, a specific row and a specific column in which the sub-region including the preset pixel E is located in the first optical pattern included in the second picture 800. For example, in FIG. 8, $(x1, y1)$ is $(3, 3)$.

Likewise the positioning engine may determine that coordinates of sub-regions including the preset pixels B, C, and D are $(x2, y2)$, $(x3, y3)$, and $(x4, y4)$ in the second picture 800.

The positioning engine may further obtain actual coordinates $(X1, Y1)$, $(X2, Y2)$, $(X3, Y3)$, and $(X4, Y4)$ of the preset pixels E, B, C, and D in the target region.

The positioning engine may obtain a preset formula:

$$\begin{bmatrix} x \\ y \\ W' \end{bmatrix} = A \begin{bmatrix} X \\ Y \\ 1 \end{bmatrix}$$

In this embodiment, the positioning engine may calculate a matrix A and a parameter W' by substituting the obtained coordinates of the preset pixels in the second picture and the obtained coordinates of the preset pixels in the target region into the preset formula.

The matrix A is a matrix with three rows and three columns.

The positioning engine may determine a preset correspondence based on the matrix A and the parameter W'.

The preset correspondence is:

$$X = \frac{x}{W'}, Y = \frac{y}{W'}$$

It can be learned that a correspondence between coordinates of each sub-region in the second picture and coordinates of each sub-region in the target region is established based on the preset correspondence.

The positioning engine may store the obtained preset correspondence.

When positioning the to-be-positioned object, the positioning engine may obtain coordinates of a first pixel in the second picture and coordinates of a second pixel in the second picture.

Specifically, the first pixel and the second pixel are pixels in any two corners of an image in any of a plurality of sub-regions included in the second picture.

For example, the first pixel may be a pixel at an upper left corner of a sub-region, and the second pixel may be a pixel at an upper right corner of the same sub-region.

The positioning engine may substitute the coordinates of the first pixel in the second picture and the coordinates of the second pixel in the second picture into the preset correspondence. In this way, the positioning engine can determine coordinates of the first pixel in the target region and coordinates of the second pixel in the target region. The positioning engine performs subtraction on the coordinates of the first pixel in the target region and the coordinates of the second pixel in the target region, to determine a width of the sub-region.

A second manner of determining the width of the target sub-region is as follows:

The positioning engine obtains a first preset formula:

$$\begin{cases} h_1 + h_2 = h \\ \dfrac{d_1}{d_2} = \dfrac{h_1}{h_2} \\ \dfrac{1}{h_1} + \dfrac{1}{h_2} = \dfrac{1}{f} \\ h_1 < h_2 \end{cases}$$

In this manner of determining the width of the target sub-region, for example, as shown in FIG. 9, one projection device projects the target sub-region.

A parameter di in the first formula is a width of a grid on an imaging component of the projection device. The grid on the imaging component of the projection device is used to project the sub-region onto the target region.

A parameter $d_2$ in the first formula is a width of a sub-region projected by the projection device onto the target region.

A parameter $h_1$ in the first formula is a distance between the imaging component and a lens of the projection device. The imaging component may be a liquid crystal display, a liquid crystal projector, a digital micromirror device, a galvanometer scanner, or the like. In this embodiment, for example, the imaging component may be a liquid crystal display.

A parameter $h_2$ in the first formula is a distance between the lens and a plane on which the target region is located.

A parameter h in the first formula is a height from the plane on which the target region is located to the liquid crystal display, h may be measured when the projection device is deployed, and the user may input h obtained through measurement into the projection device.

The parameter f in the first formula is a focal length of the lens of the projection device.

The parameters di, $h_1$, $h_2$, h, and f are known parameters.

Then, the positioning engine may derive a second formula according to the first formula:

$$d_2 = \frac{h + \sqrt{h^2 - 4hf}}{h - \sqrt{h^2 - 4hf}} d_1$$

It can be learned that in the process of determining the width of the target sub-region, the positioning engine may substitute the known parameters di, $h_1$, $h_2$, h, and f into the second formula, and the positioning engine can obtain the width of the sub-region projected by the projection device projected onto the target region.

Optionally, in this embodiment, the location of the to-be-positioned object in the target region may be a three-dimensional location of the to-be-positioned object in the target region.

Specifically, in this embodiment, the location of the to-be-positioned object in the target region may be two-dimensional coordinates of the to-be-positioned object on the ground in the indoor environment and a height of the to-be-positioned object.

For a specific process of determining the two-dimensional coordinates of the to-be-positioned object on the ground in the indoor environment, refer to the foregoing description. Details are not described again.

A specific process of obtaining the height of the to-be-positioned object by the positioning engine in this embodiment may be as follows:

A first manner of determining the height of the to-be-positioned object is as follows:

The camera included in the positioning system is a camera configured to measure depth information, for example, a depth camera Kinect Sensor or a binocular camera.

The positioning engine may directly instruct the camera to collect height information. The height information is used to indicate the height of the to-be-positioned object in the target region.

The positioning engine may directly obtain the height information, so that the positioning engine can obtain the height of the to-be-positioned object in the target region.

A second manner of determining the height of the to-be-positioned object is as follows:

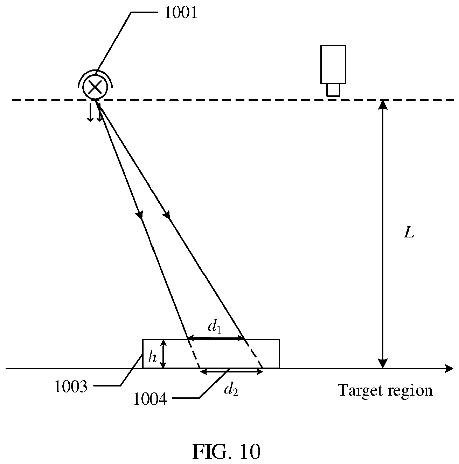

As shown in FIG. 10, for example, the target sub-region is a sub-region projected by a projection device 1001. L is a height from the plane on which the target region is located to the projection device 1001.

When the to-be-positioned object 1003 does not enter the target sub-region 1004, a width of the target sub-region 1004 projected by the projection device 1001 onto the target region is $d_2$.

When the to-be-positioned object 1003 enters the target sub-region 1004, a width of a sub-region projected by the projection device 1001 onto a surface of the to-be-positioned object 1003 is di.

The height L, the width $d_2$, and the width $d_1$ may be obtained by the positioning engine through measurement.

Then, the positioning engine can calculate the height h of the to-be-positioned object 1003 according to a third formula.

The positioning engine determines the third formula according to the principle of triangle similarity theorem:

$$\frac{d_1}{d_2} = \frac{L - h}{L}$$

Then, the positioning engine may derive a fourth formula according to the third formula.

The fourth formula is:

$$h = \left(1 - d_1/d_2\right)L$$

In a specific process of determining the height of the to-be-positioned object by the positioning engine, the positioning engine may substitute the obtained height L, width $d_2$, and width di into the fourth formula, so that the positioning engine can obtain the height h of the to-be-positioned object 1003.

A third manner of determining the height of the to-be-positioned object is as follows:

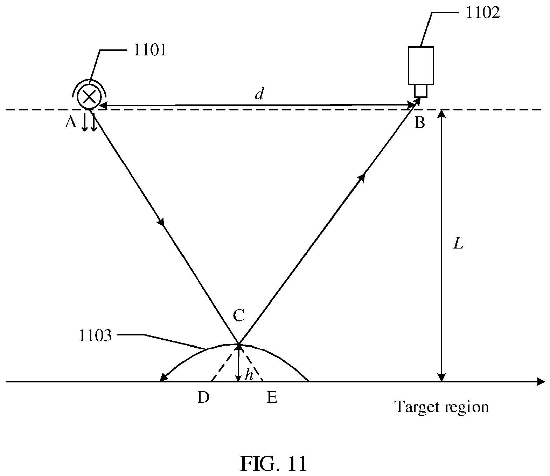

For example, as shown in FIG. 11, a point A is a location of a projection device 1101, a point B is a location of a camera 1102, and L2 is a distance between the camera 1102 and the projection device 1101.

The camera 1102 and the projection device 1101 are installed on a same plane parallel to the target region. In this case, a height difference between a horizontal plane on which the camera 1102 and the projection device 1101 are located and a horizontal plane of the target region is L.

The positioning engine obtains a location of a projected point E that is in the target region and onto which the projection device 1101 projects target light.

The target light is one of a plurality of beams of light projected by the projection device 1101.

After the to-be-positioned object 1103 enters the target region, the target light is reflected at a point C on a surface of the to-be-positioned object 1103, a specified location D is a location of a virtual image generated by reflected light after the reflected light enters the camera 1102, and a height from the to-be-positioned object 1103 to the point C on the surface of the object is h. In this case, according to a similarity between a triangle ABC and a triangle DEC, the following formula is obtained:

$$\frac{L1}{L2} = \frac{h}{L-h}$$

L1 is a distance between the point D and the point E, and L2 is the distance between the point A and the point B.

Then, the positioning engine may determine a fifth formula:

$$h = \frac{L1}{L2 + L1} L$$

In a specific process of determining the height of the to-be-positioned object by the positioning engine, the positioning engine may substitute the detected L1, L2, and L into the fifth formula, so that the positioning engine can obtain the height h of the to-be-positioned object.

The descriptions of how to position the to-be-positioned object in this embodiment are optional examples, provided that the positioning engine can determine a width of each sub-region projected by the projection device onto the target region. For example, the camera may simultaneously photograph the to-be-positioned object and a marker that are located in the target region. If the positioning engine has stored a size of the marker, the positioning engine may determine the width of each sub-region based on the size of the marker and a relative location of the marker in the target region. For example, if the positioning engine determines that the marker has a length of 1 meter, and the marker occupies two sub-regions, it indicates that the width of each sub-region is 0.5 meter.

Beneficial effects of using the positioning method in this embodiment are as follows:

According to the positioning method in this embodiment, when the positioning engine, the projection device, and the camera cooperate with each other, the to-be-positioned object can be accurately positioned, and the to-be-positioned object can be positioned, provided that data is exchanged between the positioning engine, the camera, and the projection device. Therefore, dependence on the environment is low. The positioning engine can flexibly adjust the first optical pattern based on the environment, and the positioning engine can control the projection device to project first optical patterns with different sizes onto the target region. Therefore, different accuracy requirements for positioning the to-be-positioned object are satisfied.

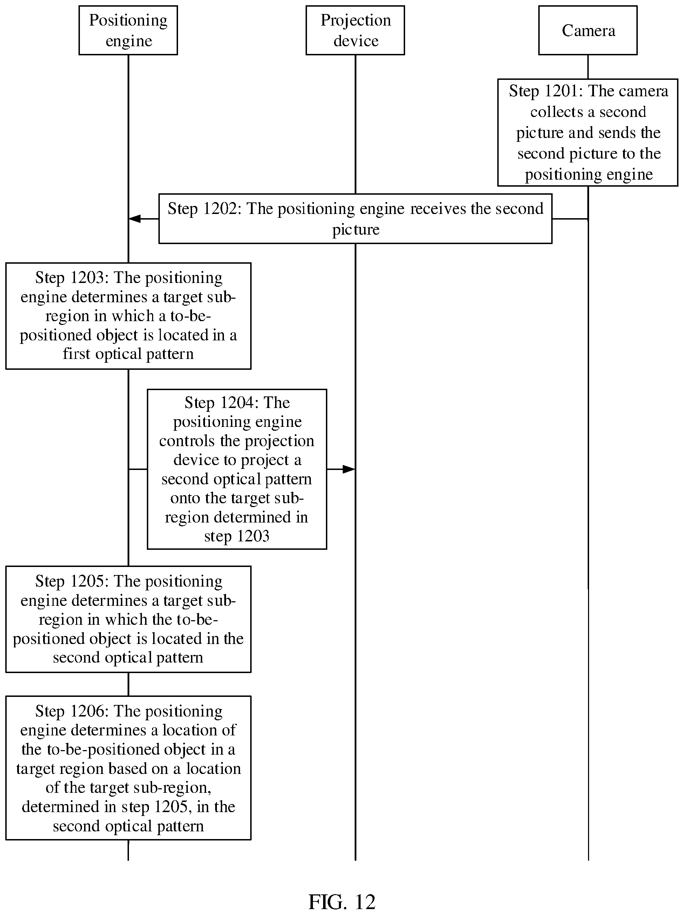

The specific process of correcting the first optical pattern projected by the projection device onto the target region is described based on FIG. 2. The following describes, with reference to an embodiment shown in FIG. 12, a specific process of quickly position the to-be-positioned object.

Step 1201: The camera collects a second picture and sends the second picture to the positioning engine.

Step 1202: The positioning engine receives the second picture.

For details about a specific execution process of step 1201 and step 1202 in this embodiment, refer to step 501 and step 502 in FIG. 5. The specific execution process is not described in this embodiment again.

Step 1203: The positioning engine determines a target sub-region in which the to-be-positioned object is located in the first optical pattern, where the target sub-region is a sub-region that is in a plurality of sub-regions in the first optical pattern and in which the to-be-positioned object is located.

Optionally, the target sub-region is a sub-region that is in the plurality of sub-regions in the first optical pattern and in which a target locating point of the to-be-positioned object is located.

For specific descriptions of the target locating point, refer to the foregoing embodiment. Details are not described in this embodiment again.

In this embodiment, for example, the target sub-region is the sub-region that is in the plurality of sub-regions in the first optical pattern and in which the target locating point of the to-be-positioned object is located.

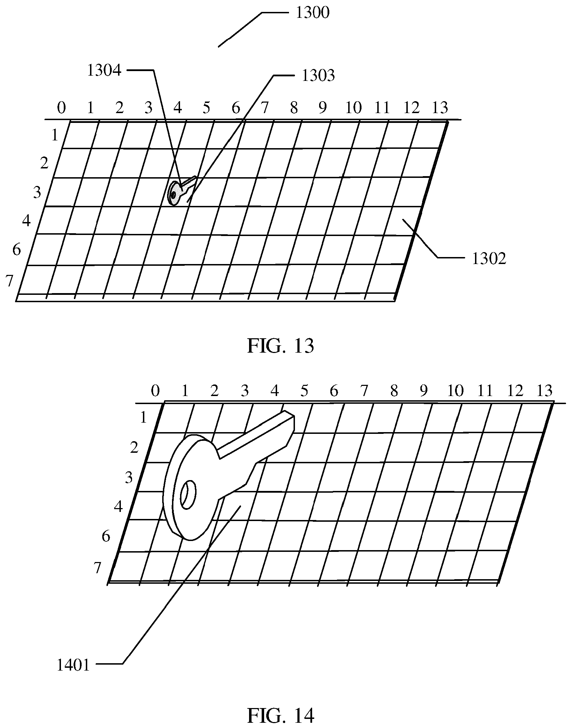

For example, in FIG. 13, the positioning engine may determine that the to-be-positioned object 1304 is located in a sub-region 1303 in a plurality of sub-regions in the first optical pattern 1300. In other words, the sub-region 1303 is the target sub-region.

Step 1204: The positioning engine controls the projection device to project a second optical pattern onto the target sub-region 1303.

Specifically, the positioning engine may send a projection instruction to the projection device. The projection instruction is used to instruct the projection device to project the second optical pattern onto the target sub-region 1303. The second optical pattern also includes a plurality of sub-regions, and an area of the sub-region included in the second optical pattern is less than an area of the sub-region included in the first optical pattern.

For example, as shown in FIG. 13, the projection instruction is used to instruct the projection device to project the second optical pattern onto the target sub-region 1303. The area of the sub-region in the second optical pattern is less than the area of the sub-region included in the first optical pattern.

For example, the positioning engine determines that an area of a sub-region 1302 included in the first optical pattern is 1 m x 1 m. When the positioning engine determines that the target locating point of the to-be-positioned object is located in the target sub-region 1303, the positioning engine may project the second optical pattern in the target sub-region 1303. The second optical pattern includes a plurality of sub-regions with an area of 10 cm x 10 cm.

Certainly, the positioning engine in this embodiment may alternatively project optical patterns including a plurality of sub-regions with an area of 10 cm x 10 cm onto the target sub-region 1303 and a sub-region surrounding the target sub-region 1303.

For example, in FIG. 14, 10 sub-regions 1401 may be projected in the target sub-region 1303, and positioning accuracy of the to-be-positioned object changes from 1 m to 10 cm. Therefore, the positioning accuracy of the to-be-positioned object is improved.

Step 1205: The positioning engine determines a target sub-region in which the to-be-positioned object is located in the second optical pattern, where the target sub-region is a sub-region that is in the plurality of sub-regions in the second optical pattern and in which the to-be-positioned object is located.

In this embodiment, when the positioning engine has projected the second optical pattern onto the target sub-region 1303, the target sub-region 1303 in the second optical pattern is divided into a plurality of smaller sub-regions. The positioning engine may further determine a sub-region that is in the plurality of sub-regions in the second optical pattern and in which the to-be-positioned object is located.

Step 1206: The positioning engine determines a location of the to-be-positioned object in the target region based on a location of the target sub-region, determined in step 1205, in the second optical pattern.

For a specific process of determining the location of the to-be-positioned object in the target region by the positioning engine based on the second optical pattern in this embodiment, refer to the specific process of determining the location of the to-be-positioned object in the target region based on the first optical pattern in the foregoing embodiment. Details are not described in this embodiment again.

According to the positioning method in this embodiment, positioning accuracy of the to-be-positioned object can be further improved, and the to-be-positioned object can be roughly positioned by using the first optical pattern in this embodiment. When the target sub-region in which the target locating point of the to-be-positioned object is located in the first optical pattern is determined, the positioning engine may control the projection device to project the finer second optical pattern onto the target sub-region in the first optical pattern, to avoid projecting the second optical pattern with relatively high accuracy onto the entire target region. This can implement more accurate positioning, avoid complexity of positioning the to-be-positioned object, and improve efficiency of positioning the to-be-positioned object.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes one or more instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of the present invention, but not for limiting the present invention. The scope of the present invention is defined by the claims. Although the present invention is also described in detail with reference to the foregoing embodiments, persons of ordinary skill in the art may make modifications to the technical solutions described in the foregoing embodiments without departing from the scope of the claims.

**Claims**

1. A positioning system, comprising at least one projection device (102), at least one camera (103), and a positioning engine (101), wherein the positioning engine (101) is connected to any of the at least one projection device (102), and the positioning engine (101) is further connected to any of the at least one camera (103);

   the at least one projection device (102) is configured to project a first optical pattern (100) onto a target region, wherein the first optical pattern (100) comprises a plurality of sub-regions;
   the at least one camera (103) is configured to collect a second picture and send the second picture to the positioning engine (101), wherein the second picture comprises the first optical pattern (100) and a to-be-positioned object located in the first optical pattern (100); and
   the positioning engine (101) is configured to receive the second picture, and determine a location of the to-be-positioned object in the target region based on a location of the to-be-positioned object in the first optical pattern (100) in the second picture; and
   the at least one camera (103) is further configured to collect a first picture and send the first picture to the positioning engine (101), wherein the first picture comprises the first optical pattern (100) projected by the at least one projection device (102) onto the target region; and
   the positioning engine (101) is further configured to receive the first picture and mark the target region based on the first picture;
   **characterized in that**
   the system comprises two projection devices (102): a first projection device and a second projection device, and that the positioning engine (101) marks the target region based on the first picture by:

   receiving two first pictures, wherein the two first pictures are collected by the at least one camera and are a first picture comprising the first optical pattern (100) projected by the first projection device onto the target region and a first picture comprising the first optical pattern (100) projected by the second projection device onto the target region;
   identifying the plurality of sub-regions comprised in the first optical pattern (100) from each of the two first pictures; and
   sending adjustment information to the first projection device and/or the second projection device, so that the first projection device and/or the second projection device make/makes adjustment based on the adjustment information, and sub-regions in the first optical patterns (100) in the two first pictures are aligned, wherein the adjustment information is used to control alignment of the sub-regions in the first optical patterns (100) in the two first pictures.

2. The system according to claim 1, wherein

   the positioning engine (101) is configured to determine a target sub-region, wherein the target sub-region is a sub-region that is in the plurality of sub-regions in the first optical pattern (100) and in which the to-be-positioned object is located;
   the positioning engine (101) is further configured to send control signaling to the at least one projection device (102), wherein the control signaling is used to control the at least one projection device (102) to project a second optical pattern onto the target sub-region, the second optical pattern comprises a plurality of sub-regions, and an area of the sub-region comprised in the second optical pattern is less than an area of the sub-region comprised in the first optical pattern; and
   the at least one projection device (102) is configured to receive the control signaling and project, based on the control signaling, the second optical pattern onto the target sub-region.

3. The system according to claim 2, wherein the second picture further comprises the second optical pattern and the to-be-positioned object located in the second optical pattern; and
   the positioning engine (101) is further configured to determine the location of the to-be-positioned object in the target region based on a location of the to-be-positioned object in the second optical pattern in the second picture.

4. The system according to claim 1, , wherein
   the positioning engine (101) is further configured to:
   obtain a width of a target sub-region, wherein the target sub-region is a sub-region that is in a plurality of sub-regions comprised in a target optical pattern and in which the to-be-positioned object is located, the target optical pattern is the first optical pattern or the second optical pattern, and the area of the sub-region comprised in the second optical pattern is less than the area of the sub-region comprised in the first optical pattern; and determine the location of the to-be-positioned object in the target region based on a location of the target sub-region in the second picture and the width of the target sub-region.

5. The system according to claim 1, wherein

the at least one camera (103) is further configured to collect height information, wherein the height information is used to indicate a height of the to-be-positioned object in the target region; and
the positioning engine (101) is further configured to obtain the height information collected by the at least one camera (103).

6. The system according to claim 2, wherein the positioning engine (101) is further configured to: obtain the width $d_2$ of the target sub-region, wherein the target sub-region is the sub-region that is in the plurality of sub-regions comprised in the target optical pattern and in which the to-be-positioned object is located, wherein the target optical pattern is the first optical pattern (100) or the second optical pattern, and the area of the sub-region comprised in the second optical pattern is less than the area of the sub-region comprised in the first optical pattern (100); when the to-be-positioned object is located in the target optical pattern, obtain a width di of a sub-region projected by the at least one projection device onto a surface of the to-be-positioned object; and obtain a height h of the to-be-positioned object in the target region according to a formula $h=(1-d_1/d_2)L$, wherein L is a distance from the target region to the at least one projection device (102).

7. The system according to claim 1, wherein

the at least one projection device (102) is further configured to project target light, wherein the target light is one of a plurality of beams of light projected by the at least one projection device (102); and
the positioning engine (101) is further configured to obtain a location of a projected point that is in the target region and onto which the target light is projected; and when the to-be-located object is located in the target optical pattern, the target optical pattern is the first optical pattern or the second optical pattern, and the area of the sub-region comprised in the second optical pattern is less than the area of the sub-region comprised in the first optical pattern, the positioning engine is configured to: obtain a specified location, wherein the specified location is a location of a virtual image generated by reflected light in the target optical pattern after the reflected light enters one of the at least one camera (103), and the reflected light is light generated by reflecting the target light from a surface of the to-be-positioned object; and obtain a height h of the to-be-positioned object in the target region according to a formula $h = \dfrac{L1}{L2 + L1} L$ , wherein L1 is a distance between the location of the projected point and the specified location, L2 is a horizontal distance between the at least one projection device (102) and the camera (103) that are located on a same horizontal plane, and L is a distance from the target region to the at least one projection device (102).

8. A positioning method, comprising:

obtaining (203) a first picture collected by at least one camera (103), wherein the first picture comprises a first optical pattern (100) projected by at least one projection device (102) onto a target region, and the first optical pattern (100) comprises a plurality of sub-regions; and
marking the target region based on the first picture;
obtaining a second picture collected by the at least one camera (103), wherein the second picture comprises the first optical pattern (100) projected by the at least one projection device (102) onto the target region and a to-be-positioned object located in the first optical pattern (100); and
determining a location of the to-be-positioned object in the target region based on a location of the to-be-positioned object in the first optical pattern in the second picture;
**characterized in that**
the marking the target region based on the first picture comprises:

receiving two first pictures, wherein the two first pictures are collected by the at least one camera (103) and are a first picture comprising the first optical pattern (100) projected by a first projection device onto the target region and a first picture comprising the first optical pattern (100) projected by a second projection device onto the target region;
identifying the plurality of sub-regions comprised in the first optical pattern (100) from each of the two first pictures; and
sending (207) adjustment information to the first projection device and/or the second projection device, so that the first projection device and/or the second projection device make/makes adjustment based on the adjustment information, and sub-regions in the first optical patterns (100) in the two first pictures are aligned, wherein the adjustment information is used to control alignment of the sub-regions in the first optical patterns (100) in the two first pictures.

9. The method according to claim 8, wherein the method further comprises:

   determining (1203) a target sub-region, wherein the target sub-region is a sub-region that is in the plurality of sub-regions in the first optical pattern (100) and in which the to-be-positioned object is located; and
   sending (1204) control signaling to the at least one projection device (102), wherein the control signaling is used to control the at least one projection device (102) to project a second optical pattern onto the target sub-region, the second optical pattern comprises a plurality of sub-regions, and an area of the sub-region comprised in the second optical pattern is less than an area of the sub-region comprised in the first optical pattern.

10. The method according to claim 8,

   wherein the determining (1203) a location of the to-be-positioned object in the target region based on a location of the to-be-positioned object in the first optical pattern in the second picture comprises:
   determining the location of the to-be-positioned object in the target region based on a location of the to-be-positioned object in the second optical pattern in the second picture; and
   wherein the determining a location of the to-be-positioned object in the target region based on a location of the to-be-positioned object in the first optical pattern in the second picture comprises:

   obtaining a width of a target sub-region, wherein the target sub-region is a sub-region that is in a plurality of sub-regions comprised in a target optical pattern and in which the to-be-positioned object is located, the target optical pattern is the first optical pattern (100) or the second optical pattern, and the area of the sub-region comprised in the second optical pattern is less than the area of the sub-region comprised in the first optical pattern (100); and
   determining the location of the to-be-positioned object in the target region based on a location of the target sub-region in the second picture and the width of the target sub-region.

11. The method according to claim 8, wherein the method further comprises:
   obtaining height information collected by the at least one camera (103), wherein the height information is used to indicate a height of the to-be-positioned object in the target region.

12. The method according to claim 9, wherein the determining the location of the to-be-positioned object in the target region based on a location of the target sub-region in the second picture and the width of the target sub-region comprises:

   obtaining the width $d_2$ of the target sub-region, wherein the target sub-region is the sub-region that is in the plurality of sub-regions comprised in the target optical pattern and in which the to-be-positioned object is located, wherein the target optical pattern is the first optical pattern or the second optical pattern, and the area of the sub-region comprised in the second optical pattern is less than the area of the sub-region comprised in the first optical pattern;
   when the to-be-positioned object is located in the target optical pattern, obtaining a width di of a sub-region projected by the at least one projection device onto a surface of the to-be-positioned object; and
   obtaining a height h of the to-be-positioned object in the target region according to a formula $h=(1-d_1/d_2)L$, wherein L is a distance from the target region to the at least one projection device (102).

13. The method according to claim 8, wherein the determining the location of the to-be-positioned object in the target region based on a location of the target sub-region in the second picture and the width of the target sub-region comprises:

   obtaining a location of a projected point onto which the at least one projection device projects target light in the target region, wherein the target light is one of a plurality of beams of light projected by the at least one projection device (102);
   when the to-be-positioned object is located in the target optical pattern, the target optical pattern is the first optical pattern (100) or the second optical pattern, and the area of the sub-region comprised in the second optical pattern is less than the area of the sub-region comprised in the first optical pattern (100), obtaining a specified location, wherein the specified location is a location of a virtual image generated by reflected light in the target optical pattern after the reflected light enters one of the at least one camera (103), and the reflected light is light generated by reflecting the target light from a surface of the to-be-positioned object; and

obtaining a height h of the to-be-positioned object in the target region according to a formula

$$h = \frac{L1}{L2 + L1} L$$

, wherein L1 is a distance between the location of the projected point and the specified location, L2 is a horizontal distance between the at least one projection device (102) and the camera (103) that are located on a same horizontal plane, and L is a distance from the target region to the at least one projection device (102).

**Patentansprüche**

1.  Positionierungssystem, das mindestens eine Projektionsvorrichtung (102), mindestens eine Kamera (103) und eine Positionierungsmaschine (101) umfasst, wobei die Positionierungsmaschine (101) mit einer der mindestens einen Projektionsvorrichtung (102) verbunden ist und die Positionierungsmaschine (101) ferner mit einer der mindestens einen Kamera (103) verbunden ist;

    die mindestens eine Projektionsvorrichtung (102) dazu konfiguriert ist, ein erstes optisches Muster (100) auf eine Zielregion zu projizieren, wobei das erste optische Muster (100) eine Vielzahl von Unterregionen umfasst;
    die mindestens eine Kamera (103) dazu konfiguriert ist, ein zweites Bild zu sammeln und das zweite Bild an die Positionierungsmaschine (101) zu senden, wobei das zweite Bild das erste optische Muster (100) sowie ein Objekt, dessen Position zu bestimmen ist und das sich im ersten optischen Muster (100) befindet, umfasst; und
    die Positionierungsmaschine (101) dazu konfiguriert ist, das zweite Bild zu empfangen und basierend auf einem Standort des Objekts, dessen Position zu bestimmen ist, im ersten optischen Muster (100) im zweiten Bild einen Standort des Objekts, dessen Position zu bestimmen ist, in der Zielregion zu bestimmen; und die mindestens eine Kamera (103) ferner dazu konfiguriert ist, ein erstes Bild zu sammeln und das erste Bild an die Positionierungsmaschine (101) zu senden, wobei das erste Bild das erste optische Muster (100) umfasst, das von der mindestens einen Projektionsvorrichtung (102) auf die Zielregion projiziert wird; und

    die Positionierungsmaschine (101) ferner dazu konfiguriert ist, das erste Bild zu empfangen und die Zielregion basierend auf dem ersten Bild zu markieren;
    **dadurch gekennzeichnet, dass**
    das System zwei Projektionsvorrichtungen (102) umfasst: eine erste Projektionsvorrichtung und eine zweite Projektionsvorrichtung und dass die Positionierungsmaschine (101) die Zielregion basierend auf dem ersten Bild durch Folgendes markiert:

    Empfangen von zwei ersten Bildern, wobei die zwei ersten Bilder von der mindestens einen Kamera gesammelt werden und ein erstes Bild, das das erste optische Muster (100) umfasst, das von der ersten Projektionsvorrichtung auf die Zielregion projiziert wird, und ein erstes Bild, das das erste optische Muster (100) umfasst, das von der zweiten Projektionsvorrichtung auf die Zielregion projiziert wird, sind;
    Identifizieren der Vielzahl von Unterregionen, die im ersten optischen Muster (100) umfasst sind, in jedem der zwei ersten Bilder und
    Senden von Anpassungsinformationen an die erste Projektionsvorrichtung und/oder die zweite Projektionsvorrichtung, derart, dass die erste Projektionsvorrichtung und/oder die zweite Projektionsvorrichtung eine Anpassung basierend auf den Anpassungsinformationen vornehmen/vornimmt und Unterregionen in den ersten optischen Mustern (100) in den zwei ersten Bildern ausgerichtet sind, wobei die Anpassungsinformationen verwendet werden, um eine Ausrichtung der Unterregionen in den ersten optischen Mustern (100) in den zwei ersten Bildern zu steuern.

2.  System nach Anspruch 1, wobei

    die Positionierungsmaschine (101) dazu konfiguriert ist, eine Zielunterregion zu bestimmen, wobei die Zielunterregion eine Unterregion ist, die in der Vielzahl von Unterregionen im ersten optischen Muster (100) enthalten ist und in der sich das Objekt, dessen Position zu bestimmen ist, befindet;
    die Positionierungsmaschine (101) ferner dazu konfiguriert ist, eine Steuersignalisierung an die mindestens eine Projektionsvorrichtung (102) zu senden, wobei die Steuersignalisierung verwendet wird, um die mindestens eine Projektionsvorrichtung (102) zu steuern, um ein zweites optisches Muster auf die Zielunterregion zu projizieren, das zweite optische Muster eine Vielzahl von Unterregionen umfasst und ein Bereich der Unterregion, die im zweiten optischen Muster umfasst ist, kleiner ist als ein Bereich der Unterregion, die im ersten optischen Muster umfasst ist; und

die mindestens eine Projektionsvorrichtung (102) dazu konfiguriert ist, die Steuersignalisierung zu empfangen und das zweite optische Muster basierend auf der Steuersignalisierung auf die Zielunterregion zu projizieren.

3. System nach Anspruch 2, wobei das zweite Bild ferner das zweite optische Muster sowie das Objekt umfasst, dessen Position zu bestimmen ist und das sich im zweiten optischen Muster befindet; und die Positionierungsmaschine (101) ist ferner dazu konfiguriert, den Standort des Objekts, dessen Position zu bestimmen ist, basierend auf einem Standort des Objekts, dessen Position zu bestimmen ist, im zweiten optischen Muster im zweiten Bild in der Zielregion zu bestimmen.

4. System nach Anspruch 1, wobei die Positionierungsmaschine (101) ferner zu Folgendem konfiguriert ist: Erhalten einer Breite einer Zielunterregion, wobei die Zielunterregion eine Unterregion ist, die in einer Vielzahl von Unterregionen enthalten ist, die in einem optischen Zielmuster umfasst sind, und in der sich das Objekt, dessen Position zu bestimmen ist, befindet, das optische Zielmuster das erste optische Muster oder das zweite optische Muster ist und der Bereich der Unterregion, der im zweiten optischen Muster umfasst ist, kleiner ist als der Bereich der Unterregion, die im ersten optischen Muster umfasst ist; und Bestimmen des Standorts des Objekts, dessen Position zu bestimmen ist, in der Zielregion basierend auf einem Standort der Zielunterregion im zweiten Bild und der Breite der Zielunterregion.

5. System nach Anspruch 1, wobei

die mindestens eine Kamera (103) ferner dazu konfiguriert ist, Höheninformationen zu sammeln, wobei die Höheninformationen verwendet werden, um eine Höhe des Objekts, dessen Position zu bestimmen ist, in der Zielregion anzuzeigen; und
die Positionierungsmaschine (101) ferner dazu konfiguriert ist, die Höheninformationen, die von der mindestens einen Kamera (103) gesammelt werden, zu erhalten.

6. System nach Anspruch 2, wobei die Positionierungsmaschine (101) ferner zu Folgendem konfiguriert ist: Erhalten der Breite $d_2$ der Zielunterregion, wobei die Zielunterregion die Unterregion ist, die in der Vielzahl von Unterregionen enthalten ist, die im optischen Zielmuster umfasst sind, und in der sich das Objekt, dessen Position zu bestimmen ist, befindet, wobei das optische Zielmuster das erste optische Muster (100) oder das zweite optische Muster ist und der Bereich der Unterregion, der im zweiten optischen Muster umfasst ist, kleiner ist als der Bereich der Unterregion, die im ersten optischen Muster (100) umfasst ist; wenn sich das Objekt, dessen Position zu bestimmen ist, im optischen Zielmuster befindet, Erhalten einer Breite $d_1$ einer Unterregion, die von der mindestens einen Projektionsvorrichtung auf eine Fläche des Objekts, dessen Position zu bestimmen ist, projiziert wird; und Erhalten einer Höhe h des Objekts, dessen Position zu bestimmen ist, in der Region gemäß einer Formel $h = (1-d_1/d_2)\,L$, wobei L ein Abstand von der Zielregion zu der mindestens einen Projektionsvorrichtung (102) ist.

7. System nach Anspruch 1, wobei

die mindestens eine Projektionsvorrichtung (102) ferner dazu konfiguriert ist, Ziellicht zu projizieren, wobei das Ziellicht einer von einer Vielzahl von Lichtstrahlen ist, die von der mindestens einen Projektionsvorrichtung (102) projiziert werden; und
die Positionierungsmaschine (101) ferner dazu konfiguriert ist, einen Standort eines projizierten Punkts zu erhalten, der sich in der Zielregion befindet und auf den das Ziellicht projiziert ist; und wenn sich das Objekt, dessen Standort zu lokalisieren ist, im optischen Zielmuster befindet, das optische Zielmuster das erste optische Muster oder das zweite optische Muster ist und der Bereich der Unterregion, der im zweiten optischen Muster umfasst ist, kleiner ist als der Bereich der Unterregion, die im ersten optischen Muster umfasst ist, die Positionierungsmaschine zu Folgendem konfiguriert ist: Erhalten eines spezifizierten Standorts, wobei der spezifizierte Standort ein Standort eines virtuellen Bildes ist, das von reflektiertem Licht im optischen Zielmuster erzeugt wird, nachdem das reflektierte Licht in eine der mindestens einen Kamera (103) eingetreten ist, und das reflektierte Licht Licht ist, das durch Reflektieren des Ziellichts von einer Fläche des Objekts, dessen Position zu bestimmen ist, erzeugt wird; und Erhalten einer Höhe h des Objekts, dessen Position zu bestimmen ist, in der Zielregion gemäß einer Formel

$$h = \frac{L1}{L2+L1} L$$

, wobei L1 ein Abstand zwischen dem Standort des projizierten Punkts und dem spezifizierten Standort ist, L2 ein horizontaler Abstand zwischen der mindestens einen Projektionsvorrichtung (102) und der Kamera (103) ist, die sich auf einer selben horizontalen Ebene befinden und L ein Abstand von der Zielregion zu der mindestens einen Projektionsvorrichtung (102) ist.

**8.** Positionierungsverfahren, das Folgendes umfasst:

Erhalten (203) eines ersten Bildes, das von mindestens einer Kamera (103) gesammelt wird, wobei das erste Bild ein erstes optisches Muster (100) umfasst, das von mindestens einer Projektionsvorrichtung (102) auf eine Zielregion projiziert wird, und das erste optische Muster (100) eine Vielzahl von Unterregionen umfasst; und
Markieren der Zielregion basierend auf dem ersten Bild;
Erhalten eines zweiten Bildes, das von der mindestens einen Kamera (103) gesammelt wird, wobei das zweite Bild das erste optische Muster (100) umfasst, das von der mindestens einen Projektionsvorrichtung (102) auf die Zielregion und ein Objekt, dessen Position zu bestimmen ist und das sich im ersten optischen Muster (100) befindet, projiziert wird; und
Bestimmen eines Standorts des Objekts, dessen Position zu bestimmen ist, in der Zielregion basierend auf einem Standort des Objekts, dessen Position zu bestimmen ist, im ersten optischen Muster im zweiten Bild;
**dadurch gekennzeichnet, dass**
das Markieren der Zielregion basierend auf dem ersten Bild Folgendes umfasst:

Empfangen von zwei ersten Bildern, wobei die zwei ersten Bilder von der mindestens einen Kamera (103) gesammelt werden und ein erstes Bild, das das erste optische Muster (100) umfasst, das von einer ersten Projektionsvorrichtung auf die Zielregion projiziert wird, und ein erstes Bild, das das erste optische Muster (100) umfasst, das von einer zweiten Projektionsvorrichtung auf die Zielregion projiziert wird, sind;
Identifizieren der Vielzahl von Unterregionen, die im ersten optischen Muster (100) umfasst sind, in jedem der zwei ersten Bilder; und
Senden (207) von Anpassungsinformationen an die erste Projektionsvorrichtung und/oder die zweite Projektionsvorrichtung, derart, dass die erste Projektionsvorrichtung und/oder die zweite Projektionsvorrichtung eine Anpassung basierend auf den Anpassungsinformationen vornehmen/vornimmt, und Unterregionen in den ersten optischen Mustern (100) in den zwei ersten Bildern ausgerichtet sind, wobei die Anpassungsinformationen verwendet werden, um eine Ausrichtung der Unterregionen in den ersten optischen Mustern (100) in den zwei ersten Bildern zu steuern.

**9.** Verfahren nach Anspruch 8, wobei das Verfahren ferner Folgendes umfasst:

Bestimmen (1203) einer Zielunterregion, wobei die Zielunterregion eine Unterregion ist, die in der Vielzahl von Unterregionen im ersten optischen Muster (100) enthalten ist und in der sich das Objekt, dessen Position zu bestimmen ist, befindet; und
Senden (1204) einer Steuersignalisierung an die mindestens eine Projektionsvorrichtung (102), wobei die Steuersignalisierung verwendet wird, um die mindestens eine Projektionsvorrichtung (102) zu steuern, um ein zweites optisches Muster auf die Zielunterregion zu projizieren, das zweite optische Muster eine Vielzahl von Unterregionen umfasst und ein Bereich der Unterregion, die im zweiten optischen Muster umfasst ist, kleiner ist als ein Bereich der Unterregion, die im ersten optischen Muster umfasst ist.

**10.** Verfahren nach Anspruch 8,
wobei das Bestimmen (1203) eines Standorts des Objekts, dessen Position zu bestimmen ist, in der Zielregion basierend auf einem Standort des Objekts, dessen Position zu bestimmen ist, im ersten optischen Muster im zweiten Bild Folgendes umfasst:

Bestimmen des Standorts des Objekts, dessen Position zu bestimmen ist, basierend auf einem Standort des Objekts, dessen Position zu bestimmen ist, im zweiten optischen Muster im zweiten Bild in der Zielregion und
wobei das Bestimmen eines Standorts des Objekts, dessen Position zu bestimmen ist, in der Zielregion basierend auf einem Standort des Objekts, dessen Position zu bestimmen ist, im ersten optischen Muster im zweiten Bild Folgendes umfasst:

Erhalten einer Breite einer Zielunterregion, wobei die Zielunterregion eine Unterregion ist, die in einer Vielzahl von Unterregionen enthalten ist, die in einem optischen Zielmuster umfasst sind, und in der sich das Objekt, dessen Position zu bestimmen ist, befindet, das optische Zielmuster das erste optische Muster (100) oder das zweite optische Muster ist und der Bereich der Unterregion, der im zweiten optischen Muster umfasst ist, kleiner ist als der Bereich der Unterregion, die im ersten optischen Muster (100) umfasst ist; und

Bestimmen des Standorts des Objekts, dessen Position zu bestimmen ist, in er Zielregion basierend auf einem Standort der Zielunterregion im zweiten Bild und der Breite der Zielunterregion.

**11.** Verfahren nach Anspruch 8, wobei das Verfahren ferner Folgendes umfasst:

Erhalten von Höheninformationen, die von der mindestens einen Kamera (103) gesammelt werden, wobei die Höheninformationen verwendet werden, um eine Höhe des Objekts, dessen Position zu bestimmen ist, in der Zielregion anzuzeigen.

**12.** Verfahren nach Anspruch 9, wobei das Bestimmen des Standorts des Objekts, dessen Position zu bestimmen ist, in der Zielregion basierend auf einem Standort der Zielunterregion im zweiten Bild und der Breite der Zielunterregion Folgendes umfasst:

Erhalten der Breite $d_2$ der Zielunterregion, wobei die Zielunterregion die Unterregion ist, die in der Vielzahl von Unterregionen enthalten ist, die im optischen Zielmuster umfasst sind, und in der sich das Objekt, dessen Position zu bestimmen ist, befindet, wobei das optische Zielmuster das erste optische Muster oder das zweite optische Muster ist und der Bereich der Unterregion, der im zweiten optischen Muster umfasst ist, kleiner ist als der Bereich der Unterregion, die im ersten optischen Muster umfasst ist;

wenn sich das Objekt, dessen Position zu bestimmen ist, im optischen Zielmuster befindet, Erhalten einer Breite $d_1$ einer Unterregion, die von mindestens einer Projektionsvorrichtung auf eine Fläche des Objekts, dessen Position zu bestimmen ist, projiziert wird; und

Erhalten einer Höhe h des Objekts, dessen Position zu bestimmen ist, in der Zielregion gemäß einer Formel $h = (1 - d_1/d_2) L$, wobei L ein Abstand von der Zielregion zu der mindestens einen Projektionsvorrichtung (102) ist.

**13.** Verfahren nach Anspruch 8, wobei das Bestimmen des Standorts des Objekts, dessen Position zu bestimmen ist, in der Zielregion basierend auf einem Standort der Zielunterregion im zweiten Bild und der Breite der Zielunterregion Folgendes umfasst:

Erhalten eines Standorts eines projizierten Punkts, auf den die mindestens eine Projektionsvorrichtung Ziellicht projiziert, in der Zielregion, wobei das Ziellicht einer von einer Vielzahl von Lichtstrahlen ist, die von der mindestens einen Projektionsvorrichtung (102) projiziert werden;

wenn sich das Objekt, dessen Position zu bestimmen ist, im optischen Zielmuster befindet, das optische Zielmuster das erste optische Muster (100) oder das zweite optische Muster ist und der Bereich der Unterregion, der im zweiten optischen Muster umfasst ist, kleiner ist als der Bereich der Unterregion, die im ersten optischen Muster (100) umfasst ist, Erhalten eines spezifizierten Standorts, wobei der spezifizierte Standort ein Standort eines virtuellen Bildes ist, das von reflektiertem Licht im optischen Zielmuster erzeugt wird, nachdem das reflektierte Licht in eine der mindestens einen Kamera (103) eingetreten ist, und das reflektierte Licht Licht ist, das durch Reflektieren des Ziellichts von einer Fläche des Objekts, dessen Position zu bestimmen ist, erzeugt wird; und

Erhalten einer Höhe h des Objekts, dessen Position zu bestimmen ist, in der Zielregion gemäß einer Formel $h = \frac{L1}{L2+L1} L$, wobei L1 ein Abstand zwischen dem Standort des projizierten Punkts und dem spezifizierten Standort ist, L2 ein horizontaler Abstand zwischen der mindestens einen Projektionsvorrichtung (102) und der Kamera (103) ist, die sich auf einer selben horizontalen Ebene befinden und L ein Abstand von der Zielregion zu der mindestens einen Projektionsvorrichtung (102) ist.

**Revendications**

**1.** Système de positionnement, comprenant au moins un dispositif de projection (102), au moins une caméra (103), et un moteur de positionnement (101), dans lequel le moteur de positionnement (101) est connecté à l'un quelconque de l'au moins un dispositif de projection (102), et le moteur de positionnement (101) est en outre connecté à l'une quelconque de l'au moins une caméra (103) ;

l'au moins un dispositif de projection (102) est configuré pour projeter un premier motif optique (100) sur une région cible, dans lequel le premier motif optique (100) comprend une pluralité de sous-régions ;

l'au moins une caméra (103) est configurée pour collecter une seconde image et envoyer la seconde image au moteur de positionnement (101), dans lequel la seconde image comprend le premier motif optique (100) et un objet à positionner situé dans le premier motif optique (100) ; et

le moteur de positionnement (101) est configuré pour recevoir la seconde image, et déterminer un emplacement de l'objet à positionner dans la région cible sur la base d'un emplacement de l'objet à positionner dans le premier motif optique (100) dans la seconde image ; et

l'au moins une caméra (103) est en outre configurée pour collecter une première image et envoyer la première image au moteur de positionnement (101), dans lequel la première image comprend le premier motif optique (100) projeté par l'au moins un dispositif de projection (102) sur la région cible ; et

le moteur de positionnement (101) est en outre configuré pour recevoir la première image et marquer la région cible sur la base de la première image ;

**caractérisé en ce que**

le système comprend deux dispositifs de projection (102) : un premier dispositif de projection et un second dispositif de projection, et **en ce que** le moteur de positionnement (101) marque la région cible sur la base de la première image en :

recevant deux premières images, dans lequel les deux premières images sont collectées par l'au moins une caméra et sont une première image comprenant le premier motif optique (100) projeté par le premier dispositif de projection sur la région cible et une première image comprenant le premier motif optique (100) projeté par le second dispositif de projection sur la région cible ;

identifiant la pluralité de sous-régions comprises dans le premier motif optique (100) à partir de chacune des deux premières images ; et

envoyant des informations de réglage au premier dispositif de projection et/ou au second dispositif de projection, de sorte que le premier dispositif de projection et/ou le second dispositif de projection effectuent/effectue un réglage sur la base des informations de réglage, et des sous-régions dans les premiers motifs optiques (100) dans les deux premières images sont alignées, dans lequel les informations de réglage sont utilisées pour commander l'alignement des sous-régions dans les premiers motifs optiques (100) dans les deux premières images.

2. Système selon la revendication 1, dans lequel le moteur de positionnement (101) est configuré pour déterminer une sous-région cible, dans lequel la sous-région cible est une sous-région qui se trouve dans la pluralité de sous-régions dans le premier motif optique (100) et dans laquelle l'objet à positionner est situé ;

le moteur de positionnement (101) est en outre configuré pour envoyer une signalisation de commande à l'au moins un dispositif de projection (102), dans lequel la signalisation de commande est utilisée pour commander l'au moins un dispositif de projection (102) pour projeter un second motif optique sur la sous-région cible, le second motif optique comprend une pluralité de sous-régions, et une zone de la sous-région comprise dans le second motif optique est inférieure à une zone de la sous-région comprise dans le premier motif optique ; et l'au moins un dispositif de projection (102) est configuré pour recevoir la signalisation de commande et projeter, sur la base de la signalisation de commande, le second motif optique sur la sous-région cible.

3. Système selon la revendication 2, dans lequel la seconde image comprend en outre le second motif optique et l'objet à positionner situé dans le second motif optique ; et

le moteur de positionnement (101) est en outre configuré pour déterminer l'emplacement de l'objet à positionner dans la région cible sur la base d'un emplacement de l'objet à positionner dans le second motif optique dans la seconde image.

4. Système selon la revendication 1, dans lequel le moteur de positionnement (101) est en outre configuré pour :

obtenir une largeur d'une sous-région cible, dans lequel la sous-région cible est une sous-région qui se trouve dans une pluralité de sous-régions comprises dans un motif optique cible et dans laquelle l'objet à positionner est situé, le motif optique cible est le premier motif optique ou le second motif optique, et la zone de la sous-région comprise dans le second motif optique est inférieure à la zone de la sous-région comprise dans le premier motif optique ; et déterminer l'emplacement de l'objet à positionner dans la région cible sur la base d'un emplacement de la sous-région cible dans la seconde image et de la largeur de la sous-région cible.

5. Système selon la revendication 1, dans lequel l'au moins une caméra (103) est en outre configurée pour collecter des informations de hauteur, dans lequel les informations de hauteur sont utilisées pour indiquer une hauteur de l'objet à positionner dans la région cible ; et

le moteur de positionnement (101) est en outre configuré pour obtenir les informations de hauteur collectées par l'au moins une caméra (103).

6. Système selon la revendication 2, dans lequel le moteur de positionnement (101) est en outre configuré pour :

obtenir la largeur $d_2$ de la sous-région cible, dans lequel la sous-région cible est la sous-région qui se trouve dans la pluralité de sous-régions comprises dans le motif optique cible et dans laquelle l'objet à positionner est situé, dans lequel le motif optique cible est le premier motif optique (100) ou le second motif optique, et la zone de la sous-région comprise dans le second motif optique est inférieure à la zone de la sous-région comprise dans le premier motif optique (100) ; lorsque l'objet à positionner est situé dans le motif optique cible, obtenir une largeur $d_1$ d'une sous-région projetée par l'au moins un dispositif de projection sur une surface de l'objet à positionner ; et obtenir une hauteur h de l'objet à positionner dans la région cible selon une formule h = $(1-d_1/d_2)$ $L$, dans lequel L est une distance de la région cible à l'au moins un dispositif de projection (102).

7. Système selon la revendication 1, dans lequel l'au moins un dispositif de projection (102) est en outre configuré pour projeter une lumière cible, dans lequel la lumière cible est l'un d'une pluralité de faisceaux de lumière projetés par l'au moins un dispositif de projection (102) ; et le moteur de positionnement (101) est en outre configuré pour obtenir un emplacement d'un point projeté qui se trouve dans la région cible et sur lequel la lumière cible est projetée ; et lorsque l'objet à localiser est situé dans le motif optique cible, le motif optique cible est le premier motif optique ou le second motif optique, et la zone de la sous-région comprise dans le second motif optique est inférieure à la zone de la sous-région comprise dans le premier motif optique, le moteur de positionnement est configuré pour : obtenir un emplacement spécifié, dans lequel l'emplacement spécifié est un emplacement d'une image virtuelle générée par la lumière réfléchie dans le motif optique cible après que la lumière réfléchie est entrée dans l'une de l'au moins une caméra (103), et la lumière réfléchie est une lumière générée en réfléchissant la lumière cible à partir d'une surface de l'objet à positionner ; et obtenir une hauteur h de l'objet à positionner dans la région cible selon une formule $h = \frac{L1}{L2+L1}L$ , dans lequel L1 est une distance entre l'emplacement du point projeté et l'emplacement spécifié, L2 est une distance horizontale entre l'au moins un dispositif de projection (102) et la caméra (103) qui sont situés sur un même plan horizontal, et L est une distance de la région cible à l'au moins un dispositif de projection (102).

8. Procédé de positionnement, comprenant :

l'obtention (203) d'une première image collectée par au moins une caméra (103), dans lequel la première image comprend un premier motif optique (100) projeté par au moins un dispositif de projection (102) sur une région cible, et le premier motif optique (100) comprend une pluralité de sous-régions ; et
le marquage de la région cible sur la base de la première image ;
l'obtention d'une seconde image collectée par l'au moins une caméra (103), dans lequel la seconde image comprend le premier motif optique (100) projeté par l'au moins un dispositif de projection (102) sur la région cible et un objet à positionner situé dans le premier motif optique (100) ; et
la détermination d'un emplacement de l'objet à positionner dans la région cible sur la base d'un emplacement de l'objet à positionner dans le premier motif optique dans la seconde image ;
**caractérisé en ce que**
le marquage de la région cible sur la base de la première image comprend :

la réception de deux premières images, dans lequel les deux premières images sont collectées par l'au moins une caméra (103) et sont une première image comprenant le premier motif optique (100) projeté par un premier dispositif de projection sur la région cible et une première image comprenant le premier motif optique (100) projeté par un second dispositif de projection sur la région cible ;
l'identification de la pluralité de sous-régions comprises dans le premier motif optique (100) à partir de chacune des deux premières images ; et
l'envoi (207) d'informations de réglage au premier dispositif de projection et/ou au second dispositif de projection, de sorte que le premier dispositif de projection et/ou le second dispositif de projection effectuent/effectue un réglage sur la base des informations de réglage, et des sous-régions dans les premiers motifs optiques (100) dans les deux premières images sont alignées, dans lequel les informations de réglage sont utilisées pour commander l'alignement des sous-régions dans les premiers motifs optiques (100) dans les deux premières images.

9. Procédé selon la revendication 8, dans lequel le procédé comprend en outre :

la détermination (1203) d'une sous-région cible, dans lequel la sous-région cible est une sous-région qui se trouve dans la pluralité de sous-régions dans le premier motif optique (100) et dans laquelle l'objet à positionner est situé ; et
l'envoi (1204) d'une signalisation de commande à l'au moins un dispositif de projection (102), dans lequel la signalisation de commande est utilisée pour commander l'au moins un dispositif de projection (102) pour projeter un second motif optique sur la sous-région cible, le second motif optique comprend une pluralité de sous-régions, et une zone de la sous-région comprise dans le second motif optique est inférieure à une zone de la sous-région comprise dans le premier motif optique.

10. Procédé selon la revendication 8,
dans lequel la détermination (1203) d'un emplacement de l'objet à positionner dans la région cible sur la base d'un emplacement de l'objet à positionner dans le premier motif optique dans la seconde image comprend :

la détermination de l'emplacement de l'objet à positionner dans la région cible sur la base d'un emplacement de l'objet à positionner dans le second motif optique dans la seconde image ; et
dans lequel la détermination d'un emplacement de l'objet à positionner dans la région cible sur la base d'un emplacement de l'objet à positionner dans le premier motif optique dans la seconde image comprend :
l'obtention d'une largeur d'une sous-région cible, dans lequel la sous-région cible est une sous-région qui se trouve dans une pluralité de sous-régions comprises dans un motif optique cible et dans laquelle l'objet à positionner est situé, le motif optique cible est le premier motif optique (100) ou le second motif optique, et la zone de la sous-région comprise dans le second motif optique est inférieure à la zone de la sous-région comprise dans le premier motif optique (100) ; et
la détermination de l'emplacement de l'objet à positionner dans la région cible sur la base d'un emplacement de la sous-région cible dans la seconde image et de la largeur de la sous-région cible.

11. Procédé selon la revendication 8, dans lequel le procédé comprend en outre :

l'obtention d'informations de hauteur collectées par l'au moins une caméra (103), dans lequel les informations de hauteur sont utilisées pour indiquer une hauteur de l'objet à positionner dans la région cible.

12. Procédé selon la revendication 9, dans lequel la détermination de l'emplacement de l'objet à positionner dans la région cible sur la base d'un emplacement de la sous-région cible dans la seconde image et de la largeur de la sous-région cible comprend :

l'obtention de la largeur $d_2$ de la sous-région cible, dans lequel la sous-région cible est la sous-région qui se trouve dans la pluralité de sous-régions comprises dans le motif optique cible et dans laquelle l'objet à positionner est situé, dans lequel le motif optique cible est le premier motif optique ou le second motif optique, et la zone de la sous-région comprise dans le second motif optique est inférieure à la zone de la sous-région comprise dans le premier motif optique ;
lorsque l'objet à positionner est situé dans le motif optique cible, l'obtention d'une largeur $d_1$ d'une sous-région projetée par l'au moins un dispositif de projection sur une surface de l'objet à positionner ; et
l'obtention d'une hauteur h de l'objet à positionner dans la région cible selon une formule h = $(1-d_1/d_2)$ $L$, dans lequel L est une distance de la région cible à l'au moins un dispositif de projection (102).

13. Procédé selon la revendication 8, dans lequel la détermination de l'emplacement de l'objet à positionner dans la région cible sur la base d'un emplacement de la sous-région cible dans la seconde image et de la largeur de la sous-région cible comprend :

l'obtention d'un emplacement d'un point projeté sur lequel l'au moins un dispositif de projection projette une lumière cible dans la région cible, dans lequel la lumière cible est l'un d'une pluralité de faisceaux de lumière projetés par l'au moins un dispositif de projection (102) ;
lorsque l'objet à positionner est situé dans le motif optique cible, le motif optique cible est le premier motif optique (100) ou le second motif optique, et la zone de la sous-région comprise dans le second motif optique est inférieure à la zone de la sous-région comprise dans le premier motif optique (100),
l'obtention d'un emplacement spécifié, dans lequel l'emplacement spécifié est un emplacement d'une image virtuelle générée par la lumière réfléchie dans le motif optique cible après que la lumière réfléchie est entrée dans l'une de l'au moins une caméra (103), et la lumière réfléchie est une lumière générée en réfléchissant la lumière cible à partir d'une surface de l'objet à positionner ; et
l'obtention d'une hauteur h de l'objet à positionner dans la région cible selon une formule

$$h = \frac{L1}{L2+L1} L$$

, dans lequel L1 est une distance entre l'emplacement du point projeté et l'emplacement spécifié, L2 est une distance horizontale entre l'au moins un dispositif de projection (102) et la caméra (103) qui sont situés sur un même plan horizontal, et L est une distance de la région cible à l'au moins un dispositif de projection (102).

FIG. 1

Positioning engine | Projection device | Camera

Step 201: The positioning engine sends a projection instruction to the projection device

Step 202: The projection device projects a first optical pattern onto a target region based on the projection instruction

Step 203: The camera collects and sends a first picture

Step 204: The positioning engine receives the first picture

Step 205: The positioning engine switches off the projection device

Step 206: The positioning engine determines whether the first optical pattern meets a target condition, and performs step 207 if the first optical pattern does not meet the target condition

Step 207: The positioning engine sends adjustment information to the projection device

Step 208: The projection device adjusts the first optical pattern based on the adjustment information

FIG. 2

FIG. 3

FIG. 4

Positioning engine

Projection device

Camera

Step 501: The camera collects a second picture and sends the second picture to the positioning engine

Step 502: The positioning engine receives the second picture

Step 503: The positioning engine determines a target sub-region in which a to-be-positioned object is located

Step 504: The positioning engine determines a location of the to-be-positioned object in a target region based on a location of the target sub-region in the second picture

FIG. 5

FIG. 6

FIG. 7

800

FIG. 8

FIG. 9

FIG. 10

FIG. 11

| Positioning engine | Projection device | Camera |
|---|---|---|

Step 1201: The camera collects a second picture and sends the second picture to the positioning engine

Step 1202: The positioning engine receives the second picture

Step 1203: The positioning engine determines a target sub-region in which a to-be-positioned object is located in a first optical pattern

Step 1204: The positioning engine controls the projection device to project a second optical pattern onto the target sub-region determined in step 1203

Step 1205: The positioning engine determines a target sub-region in which the to-be-positioned object is located in the second optical pattern

Step 1206: The positioning engine determines a location of the to-be-positioned object in a target region based on a location of the target sub-region, determined in step 1205, in the second optical pattern

FIG. 12

1300

1304

1303

0 1 2 3 4 5 6 7 8 9 10 11 12 13

1

2

3

4

6

7

1302

FIG. 13

0 1 2 3 4 5 6 7 8 9 10 11 12 13

1

2

3

4

6

7

1401

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2161695 A1
- US 2004150836 A1
- US 2016377417 A1